# NEUE EUROPÄISCHE PATENTSCHRIFT

(11) **EP 3 533 315 B2**
(45) Veröffentlichungstag und Bekanntmachung des Hinweises auf die Entscheidung über den Einspruch: **18.02.2026**
(45) Hinweis auf die Patenterteilung: 08.02.2023
(21) Anmeldenummer: 18211609.5
(22) Anmeldetag: 11.12.2018
(51) Int. Cl.: G05B 13/02, A01D 43/08

(54) **FELDHÄCKSLER UND VERFAHREN ZUM BETREIBEN EINES FELDHÄCKSLERS**
FIELD HAY CHOPPER AND METHOD FOR OPERATING SAME
RÉCOLTEUSE-HACHEUSE-CHARGEUSE DE FOURRAGE ET PROCÉDÉ DE FONCTIONNEMENT D'UNE RÉCOLTEUSE-HACHEUSE-CHARGEUSE DE FOURRAGE

(30) Priorität: 26.02.2018 DE 102018104287
(43) Veröffentlichungstag der Anmeldung: 04.09.2019
(73) Patentinhaber: CLAAS Selbstfahrende Erntemaschinen GmbH, 33428 Harsewinkel (DE)
(72) Erfinder: Heitmann, Christoph, 48231 Warendorf (DE)

(56) Entgegenhaltungen:
- EP-A1- 2 220 926
- EP-A1- 2 987 396
- EP-A2- 2 401 904
- EP-B1- 2 220 926
- DE-A1- 102010 002 343
- US-A1- 2006 241 837

## Beschreibung

Die vorliegende Erfindung betrifft einen Feldhäcksler gemäß dem Oberbegriff des Anspruches 1.

Die DE 102 41 788 A1 beschreibt einen Feldhäcksler mit einer Häckselvorrichtung, die auf einer rotierend angetriebenen Häckseltrommel über den Umfang verteilt angeordnete Häckselmesser aufweist. Durch die Rotationsgeschwindigkeit der Häckseltrommel wird die Länge des Häckselgutes mitbestimmt, welche von einer Steuereinrichtung in Abhängigkeit von der Feuchtigkeit des Erntegutes anpassbar ist. Die Feuchtigkeit des Erntegutes wird sensorisch bestimmt.

Die DE 10 2011 005 317 B4 hat einen Feldhäcksler mit einer Häckselvorrichtung zum Gegenstand, wobei mittels einer Vorrichtung der Verschleißzustand, insbesondere die Abstumpfung der Schneide von Häckselmessern, bestimmt wird. Darüber hinaus erfolgt mittels der Vorrichtung eine Justierung des Abstandes von Schneide und Gegenschneide der Häckselvorrichtung. Zur Bestimmung der Schärfe der Schneide durchläuft das Häckselmesser ein Feld eines induktiven Sensors, dessen Sensorwerte an eine Auswerteeinheit übertragen werden. In der Auswerteeinheit sind vordefinierte Grenzwerte für die Schärfe hinterlegt, deren Unterschreiten automatisch ein Schärfen der Schneiden der Häckselmesser auslöst oder eine Bedienperson über die Notwendigkeit des Schärfens informiert. Hierzu ist die Auswerteeinheit mit einem Computer des Feldhäckslers verbunden.

Aus der EP 1 380 204 B1 ist ein Feldhäcksler mit einer Nachbeschleunigungsvorrichtung bekannt, welche der Beschleunigung eines aus gehäckseltem Erntegut bestehenden Gutstroms dient, welches entlang eines Förderschachts der Nachbeschleunigungsvorrichtung zugeführt wird. Die Nachbeschleunigungsvorrichtung ist abschnittsweise von einem Gehäuse umgeben, innerhalb dessen die Nachbeschleunigungsvorrichtung mittels eines Achsverschiebemechanismus relativbeweglich ist, um einen Abstand zwischen dem Förderschacht und der Nachbeschleunigungsvorrichtung verändern zu können. Die Veränderung des Abstands erfolgt dabei in Abhängigkeit von Feuchte, Dichte oder Geschwindigkeit des Ernteguts. Die Bestimmung von Feuchte, Dichte oder Geschwindigkeit erfolgt durch einen Sensor, dessen Signale an eine Auswerte- und Recheneinheit übertragen werden. Die Verstellung erfolgt durch eine Aktuatorik, die von der Auswerte- und Recheneinheit angesteuert wird.

Aus der EP 2 401 904 A2 ist ein Fahrassistenzsystem für einen Mähdrescher bekannt.

Aus dem Stand der Technik ist es somit für einen Feldhäcksler bekannt, Arbeitsorgane, die zumindest ein einstellbares Erntegutbehandlungsmittel, wenigstens eine Aktuatorik zur Einstellung und/oder Betätigung des zumindest einen Erntegutbehandlungsmittels sowie eine Steuereinheit zur Ansteuerung der Aktuatorik aufweisen, sensorisch zu überwachen und die Aktuatorik in Abhängigkeit von einem sensorisch erfassten Betriebs- oder Ernteprozessparameter anzusteuern. Dabei handelt es sich um Steuerkreise, die in sich geschlossen sind und autark arbeiten. Das heißt, dass etwaige Wechselwirkungen an einem Arbeitsorgan vorgenommener Einstellungen auf die Arbeitsweise und Qualität anderer Arbeitsorgane unberücksichtigt bleiben. Dies hat insbesondere den Nachteil, dass der Feldhäcksler in seiner Leistungsfähigkeit nicht voll ausgenutzt werden kann.

Daher ist es Aufgabe der vorliegenden Erfindung einen Feldhäcksler der eingangs genannten Art sowie ein Verfahren zum Betreiben eines solchen Feldhäckslers bereitzustellen, so dass sich eine höhere Effizienz im Betrieb, insbesondere im Erntebetrieb, einstellt.

Diese Aufgabe wird erfindungsgemäß durch einen Feldhäcksler gemäß dem Anspruch 1 gelöst.

Hierzu weist das Fahrerassistenzsystem ein in dem Speicher oder in einer Speichereinheit der jeweiligen Steuereinheiten hinterlegte Regelwerke auf, die den jeweiligen Einstellautomaten zugeordnet sind, wobei das dem jeweiligen Einstellautomaten zugeordnete Regelwerk eine Optimierung der Arbeitsweise des jeweiligen Arbeitsorgans unabhängig von der Arbeitsweise der anderen Arbeitsorgane bewirkt.

Insbesondere kann das Fahrerassistenzsystem zur Optimierung der Arbeitsweise der einzelnen Arbeitsorgane in dem Speicher hinterlegte, auswählbare arbeitsorganspezifische Strategien aufweisen. Die individuelle Auswählbarkeit von arbeitsorganspezifischen Strategien bietet den Vorteil, dass hierdurch eine Vorgabe erfolgt, welcher Schwerpunkt bei der Optimierung der Arbeitsweise angestrebt wird. So können die arbeitsorganspezifischen Strategien beispielsweise als Zielstellungen "Effizienz", "Kosten", "Leistung" sowie "Arbeitsqualität" aufweisen. Die vorstehende Aufzählung ist als nicht abschließend zu verstehen. Diese Zielstellungen arbeitsorganspezifischer Strategien können entsprechend des jeweils zu optimieren Arbeitsorgans variieren, da nicht für alle Arbeitsorgane identische Zielstellungen respektive Strategien vorgesehen sein können.

Hierzu können die auswählbaren arbeitsorganspezifischen Strategien jeweils auf eine Zielvorgabe der Einstellung oder der Optimierung mindestens eines Ernteprozessparameters durch Vorgabe zumindest eines Betriebsparameters zumindest eines der Arbeitsorgane gerichtet sein. Als Ernteprozessparameter werden qualitativ und quantitativ bestimmbare Arbeitsergebnisse von einzelnen Arbeitsorganen bis hin zum Arbeitsergebnis des Feldhäckslers in seiner Gesamtheit angesehen, beispielsweise Verdichtbarkeit von Erntegut, Flächenleistung, Silierbarkeit von Erntegut, Leistungsbedarf und dergleichen mehr, welche durch einen oder mehrere Betriebsparameter zumindest eines der Arbeitsorgane beeinflusst werden.

Gemäß einer vorteilhaften Weiterbildung kann eine Aktivierung des Fahrerassistenzsystems durch eine Bedienperson oder durch Detektion einer kritischen Arbeitsweise des Feldhäckslers erfolgen. Dies bietet der Bedienperson die Möglichkeit, aktiv eine Optimierung eines oder mehrerer Arbeitsorgane durchzuführen. Andererseits kann eine im Rahmen einer automatischen Prozessüberwachung detektierte kritische Arbeitsweise zeitnah zu einer selbsttätigen Aktivierung des Fahrerassistenzsystems führen, um dieser entgegenzuwirken. Dabei wird die Bedienperson nur dann mit der Durchführung einer Optimierung konfrontiert, wenn eine tatsächliche Verschlechterung eines Arbeitsergebnisses eingetreten ist.

Erfindungsgemäß steuert das Fahrerassistenzsystem die Einstellautomaten des Feldhäckslers als Supervisor an, so dass sich eine Optimierung eines Gesamtarbeitsprozesses des Feldhäckslers einstellen kann.

Dazu sollte die Optimierung des Gesamtarbeitsprozesses zumindest folgende Schritte umfassen:
a) Analysieren der Arbeitsweise des Feldhäckslers und Identifikation einer kritischen Arbeitsweise;
b) Abarbeiten zumindest eines in der Rechenvorrichtung hinterlegten Regelwerkes zur Überwindung der kritischen Arbeitsweise, indem optimierte Betriebsparameter eines oder mehrerer Arbeitsorgane unter Berücksichtigung von Wechselwirkungen zwischen den Arbeitsorganen vorgeschlagen werden;
c) Visualisierung der Auswirkung von Wechselwirkungen;
d) selbsttätige oder von einer Bedienperson vorgenommene Einstellung der in Schritt b) generierten optimierten Betriebsparameter an einem o der mehreren Arbeitsorganen sowie Betreiben des Feldhäckslers mit den optimierten Betriebsparametern; und
e) Beurteilung und Überprüfung der Arbeitsweise des Feldhäckslers nach erfolgter Einstellung der optimierten Betriebsparameter an dem zumindest einen Arbeitsorgan.

Dies ermöglicht die chronologische Nachvollziehbarkeit der Optimierung. Hierdurch bleibt die Bedienperson über die erreichten Effekte informiert und wird über die bereits durchgeführten und noch durchzuführenden Handlungen unterrichtet. Vorteilhaft ist dabei die Visualisierung der Auswirkung von möglichen Wechselwirkungen zwischen den einzelnen Arbeitsorganen, wodurch die Bedienperson aktiv Kenntnis darüber erlangen kann, wie sich Änderungen einzelner Betriebsparameter auf den Gesamtprozess auswirken können. Dabei wird die getroffene Auswahl der arbeitsorganspezifischen Strategie berücksichtigt, die dem Optimierungsprozess jeweils zu Grunde liegt.

Erfindungsgemäß ist zumindest einem Teil der Arbeitsorgane jeweils ein Sensorsystem zugeordnet, welches zur Erfassung von Signalen zur Bestimmung von Betriebsparametern sowie arbeitsorganspezifischen Parametern eingerichtet ist, wobei das Fahrerassistenzsystem dazu eingerichtet ist, die Signale des jeweiligen Sensorsystems zu empfangen und auszuwerten. Dabei werden unter Betriebsparametern Informationen verstanden, die durch die Aktuatorik des jeweiligen Arbeitsorgans einstellbar sind, beispielsweise Drehzahl, Abstand, und dergleichen mehr. Der Begriff arbeitsorganspezifischer Parameter beschreibt das jeweilige Arbeitsergebnis eines Arbeitsorgans, wie beispielsweise Durchsatz, Schnittlänge, Erntegutaufschluss. Das zentralisierte Empfangen und Auswerten der Signale des jeweiligen Sensorsystems durch das Fahrerassistenzsystem ist eine Voraussetzung für die Funktion als Supervisor.

Des Weiteren sind die Sensorsysteme dazu eingerichtet, die von dem jeweiligen Sensorsystem erfassten Signale zur Bestimmung der arbeitsorganspezifischen Parameter den damit korrespondierenden Einstellautomaten als Eingangssignale bereitzustellen. Den jeweiligen Einstellautomaten stehen somit unabhängig vom Fahrerassistenzsystem aktuelle arbeitsorganspezifische Parameter zur Verfügung, um auch unabhängig von den anderen Einstellautomaten optimiert werden zu können.

Weiterhin ist das Fahrerassistenzsystem dazu eingerichtet, Ausgangssignale des jeweiligen Einstellautomaten den anderen Einstellautomaten als zusätzliche Steuereingangssignale bereitzustellen. Auf diese Weise wird eine arbeitsorganübergreifende Optimierung der Einstellautomaten ermöglicht, da jeder der der Einstellautomaten über Änderungen von Betriebsparametern der anderen Einstellautomaten informiert wird, wodurch der Einfluss von Wechselwirkungen auf den jeweiligen Optimierungsvorgang minimiert werden kann.

Gemäß einer vorteilhaften Weiterbildung kann das Fahrerassistenzsystem mit zusätzlichen Assistenzsystemen vernetzbar sein, welche der Steuerung oder Regelung von Antriebsvorrichtung, Fahrwerk, Lenksystem, Überladesystem und/oder Spurführungssystem dienen. Ein Assistenzsystem der Antriebsvorrichtung kann dazu dienen, eine Fahrgeschwindigkeit des Feldhäckslers bei durch die Bedienperson vorgegebener Auslastung der Antriebsvorrichtung in Abhängigkeit vom Erntegutdurchsatz und der Auslastung automatisch einzustellen. Das Assistenzsystem der Antriebsvorrichtung ist ebenfalls durch Vorgabe einer Funktionsstrategie, beispielsweise Tempomat, konstanter Durchsatz oder Motorauslastung, betreibbar. Ein Assistenzsystem des Fahrwerks kann beispielsweise eine Reifendruckregelung sein, die automatisch bei Straßenfahrt oder Feldfahrt eine Anpassung des Reifendrucks vornimmt. Als Assistenzsystem des Lenk- und/oder Spurführungssystems kann vorgesehen sein, dass aktiv in die Lenkung des Feldhäckslers eingegriffen wird, um den Feldhäcksler entlang paralleler Spuren zu führen. Dabei kann sich neben Positionsortungssignalen zusätzlicher Korrektursignale bedient werden, um die Genauigkeit der Spurführung zu erhöhen.

So sind als Arbeitsorgane des Feldhäckslers zumindest ein Vorsatzgerät, eine Einzugsvorrichtung, eine Häckselvorrichtung, eine Schleifvorrichtung, eine Nachbeschleunigungsvorrichtung und eine Auswurfvorrichtung vorgesehen.

Zudem können als weitere Arbeitsorgane eine Nachbearbeitungsvorrichtung und/oder eine Siliermitteldosier-vorrichtung vorgesehen sein.

Vorteilhafterweise können als Einstellautomaten ein Vorsatzgeräteautomat und ein Einzugsautomat vorgesehen sein. Durch den Vorsatzgeräteautomaten und den Einzugsautomaten können vor allem die Gutannahme und der Erntegutdurchsatz optimiert werden. Dabei stehen die Einstellungen zur Erreichung eines guten Gutflusses im Vorsatzgerät und der Einzugsvorrichtung der Vermeidung von Überlängen gegenüber.

Insbesondere können der Vorsatzgeräteautomat und der Einzugsautomat funktional in einem Zuführautomaten zusammengeführt sein. Vor dem Hintergrund, dass die Einstellungen zur Optimierung von Gutfluss und Häckselqualität im Sinne der Vermeidung von Überlängen die konzertierte Anpassung der Betriebsparameter von Vorsatzgerät und Einzugsvorrichtung erfordert, ist das Zusammenführen der beiden Einstellautomaten Vorsatzgeräteautomat und Einzugsautomat in einem Zuführautomat vorteilhafter. Hierzu kann dem Zuführautomaten von einem Sensorsystem, welches zur Bestimmung von Überlängen im gehäckselten Erntegut geeignet ist, entsprechende Signale zur Verfügung gestellt werden, um eine Optimierung durch den Zuführautomaten durchzuführen.

Weiterhin können als Einstellautomat ein Häckselautomat und/oder ein Schneidschärfeautomat vorgesehen sein. Mit dem Häckselautomaten lassen sich die einander konträr gegenüberstehende Strategien "Arbeitsqualität" und "Leistung" der Häckselvorrichtung darstellen, indem die Ernteprozessparameter "Verdichtbarkeit" und "Flächenleistung" der Häckselvorrichtung durch die Vorgabe zumindest eines Betriebsparameters eines der Erntegutbehandlungsmittel gemäß dem korrespondierenden Regelwerk optimiert werden.

Der Schneidschärfeautomat hat auf die Ernteprozessparameter "Verdichtbarkeit" und "Flächenleistung" der Häckselvorrichtung einen wesentlichen Einfluss, da die Schärfe von Häckselmessern der Häckselvorrichtung sowohl die Häckselqualität als auch den Leistungsbedarf beeinflusst. Eine abnehmende Schärfe führt dazu, dass die Ernteprozessparameter "Verdichtbarkeit" und "Flächenleistung" der Häckselvorrichtung im Rahmen der vorgegebenen Strategie nicht in der angestrebten Weise optimierbar sind. Entsprechend kann hier das Fahrerassistenzsystem in seiner Funktion als Supervisor eingreifen, um eine Optimierung aufgrund dieser Wechselwirkungen zu erreichen.

Des Weiteren kann bzw. können als Einstellautomaten ein Nachbearbeitungsautomat und/oder ein Siliermittelautomat vorgesehen sein. Der Nachbearbeitungsautomat steuert oder regelt die Arbeitsweise der Nachbearbeitungsvorrichtung. Mittels des Nachbearbeitungsautomaten lassen sich die einander konträr gegenüberstehende Strategien "Arbeitsqualität" und "Leistung" der Nachbearbeitungsvorrichtung darstellen, indem die Ernteprozessparameter "Aufschluss" und "Flächenleistung" der Nachbearbeitungsvorrichtung durch die Vorgabe zumindest eines Betriebsparameters eines der Erntegutbehandlungsmittel der Nachbearbeitungsvorrichtung gemäß dem korrespondierenden Regelwerk optimiert werden. Ein optimierter Betrieb der Nachbearbeitungsvorrichtung ist zudem vor dem Hintergrund des Kraftstoffverbrauchs von wesentlicher Bedeutung.

Der Siliermittelautomat steuert oder regelt die Arbeitsweise der Siliermitteldosiervorrichtung unter Berücksichtigung der konträren Strategien "Arbeitsqualität" und "Kosten". Mittels eines der Sensorsysteme können die Inhaltsstoffe des Häckselgutes erfasst werden, um mit Hilfe des hinterlegten Regelwerks die für eine gute Silierbarkeit erforderliche Siliermittelmenge zu bestimmen. Zudem kann dem Siliermittelautomaten auch eine Information über die jeweilige Durchsatzmenge bereitgestellt werden, um auf etwaige Durchsatzschwankungen reagieren zu können.

Weiterhin kann bzw. können als Einstellautomaten ein Auswurfautomat und/oder ein Nebenaggregatoptimierungsautomat vorgesehen sein. Der Auswurfautomat steuert oder regelt die Arbeitsweise der Nachbeschleunigungsvorrichtung und der Auswurfvorrichtung unter Berücksichtigung der konträren Strategien "Effizienz" und "Leistung". Mittels eines der Sensorsysteme, welches der Auswurfvorrichtung zugeordnet sein kann, kann die Strömungsgeschwindigkeit und das Strömungsverhalten respektive der Gutfluss des Erntegutes bestimmt und überwacht werden. Durch das Regelwerk lassen sich die Einstellungen bestimmen, die einerseits einen guten Gutfluss und andererseits einen geringen Leistungsbedarf erfordern.

Dem Nebenaggregatoptimierungsautomat kommt die Aufgabe zu, neben den zentralen Einstellautomaten der jeweiligen Arbeitsorgane, weitere Optimierungen hinsichtlich "Arbeitsqualität", "Leistung" sowie "Effizienz" zu bewirken. Das Regelwerk des Nebenaggregatoptimierungsautomaten basiert auf den gleichen Voraussetzungen wie die anderen Regelwerke der Einstellautomaten. Beispielsweise kann der Nebenaggregatoptimierungsautomat von dem Sensorsystem, welches den Durchsatz an Erntegut bestimmt, mit den entsprechenden durchsatzspezifischen Signalen versorgt werden, um eine durchsatzabhängige Einstellung des Trommelbodens der Häckselvorrichtung durchzuführen, wodurch sich der Leistungsbedarf der Häckselvorrichtung reduzieren lässt. Denkbar ist auch, dass bei der Ernte von Gras der Abstand einer Schachtwand zu der Nachbeschleunigungsvorrichtung verstellt wird, um eine höhere Austrittsgeschwindigkeit zu erreichen.

Gemäß einer bevorzugten Weiterbildung kann das Fahrerassistenzsystem ein Dialogmodul umfassen, welches einer dialoggeführten Bedienung des Fahrerassistenzsystems durch eine Bedienperson dient. Das Dialogmodul kann dazu dienen, der Bedienperson des Feldhäckslers die Einstellung und Optimierung der Arbeitsorgane zu vereinfachen, indem die Bedienperson eine Problemstellung, die aus einer erkannten kritischen Arbeitsweise resultieren kann, mittels des Dialogmoduls an das Fahrerassistenzsystem adressiert. Das Fahrerassistenzsystem kann insbesondere durch eine schrittweise Anleitung der Bedienperson eine Abhilfe der Problemstellung bereitstellen. Dabei kann das Fahrerassistenzsystem iterativ und im interaktiven Dialog mit der Bedienperson arbeiten.

Hierbei kann die dialoggeführte Bedienung zwischen dem Fahrerassistenzsystem und der Bedienperson natürlichsprachig erfolgen. Durch den natürlichsprachigen Dialog wird die Akzeptanz der Optimierung durch das Fahrerassistenzsystem gesteigert und zugleich dessen Handhabung vereinfacht.

Insbesondere kann ein Dialog zwischen dem Fahrerassistenzsystem und dem der Bedienperson zumindest folgende Schritte umfassen:
a) Aktivierung des Dialogmoduls,
b) Editieren eines Einsatzzwecks,
c) Start eines Moduls "Optimierung", welches die Bedienperson zur Auswahl einer Strategie auffordert,
d) Aktivierung einer dialoggeführten Optimierung zumindest eines Betriebsparameters eines Arbeitsorgans in Abhängigkeit von der ausgewählten Strategie unter Berücksichtigung einer Beeinflussung von arbeitsorganspezifischen Parametern anderer Arbeitsorgane hierdurch.

Es kann somit ein im Wesentlichen immer gleich aufgebauter Dialog zwischen der Bedienperson und dem Fahrerassistenzsystem stattfinden, wodurch das Arbeiten mit dem Fahrerassistenzsystem wegen des hohen Wiedererkennungsgrades vereinfacht wird, unabhängig davon, welchen Einsatzzweck die Bedienperson auswählt.

Gemäß einem weiteren vorteilhaften Aspekt kann das Fahrerassistenzsystem mit einer mobilen Datenverarbeitungsvorrichtung zur Durchführung einer bidirektionale Kommunikation verbindbar sein, wobei die mobile Datenverarbeitungsvorrichtung über eine grafische Benutzerschnittstelle verfügt und dazu eingerichtet ist, zumindest die Funktionen des Fahrerassistenzsystems des Feldhäckslers zu visualisieren und entfernt auszuführen. Die mobile Datenverarbeitungsvorrichtung kann dazu eingereicht sein, zumindest die gleichen Informationen, Dialoge und Manipulationsmöglichkeiten bereitzustellen, wie dies durch das Fahrerassistenzsystem möglich ist. Zudem erfolgt die Visualisierung der Daten und Dialoge in nahezu identischer Weise wie die beim Fahrerassistenzsystem der Fall ist. Der Bedienperson stellt sich somit die im Wesentlichen gleiche Bedienoberfläche und Bedienungsstruktur dar. Durch die mobile Datenverarbeitungsvorrichtung bieten sich erweiterte Einsatzmöglichkeiten, beispielsweise die Beobachtung des Arbeitsprozesses durch eine weitere Person, insbesondere außerhalb des Feldhäckslers. Ebenso kann das Fahrerassistenzsystem mittels der mobilen Datenverarbeitungsvorrichtung ferngesteuert werden. Beispielsweise kann eine Strategieänderung durch einen weiteren Prozessteilnehmer einer Prozesskette initiiert werden, wenn durch den weiteren Prozessteilnehmer eine Anpassung eines Ernteprozessparameters zur Erreichung der Zielvorgabe der gewählten Strategie als erforderlich erachtet wird.

Dabei kann der Feldhäcksler eine Kommunikationseinheit umfassen, welche mit zumindest einer ersten Schnittstelle ausgestattet ist, die mit einem Bussystem des Feldhäckslers verbindbar ist, und zumindest einer zweiten Schnittstelle zum Verarbeiten und Aufbereiten von Signalen des Bussystems und zum Übermitteln an die mobile Datenverarbeitungsvorrichtung.

Insbesondere kann die mobile Datenverarbeitungsvorrichtung eine Speichereinheit aufweisen, in welcher audiovisuelle Sequenzen abrufbar hinterlegbar sind. Durchzuführende Wartungs-, Umbau- oder Reparaturmaßnahmen, die manuell erfolgen müssen, können in der Weise unterstütz werden, dass die mobile Datenverarbeitungsvorrichtung zusätzlich Informationen in Form von Texten, Bilder sowie Videosequenzen bereitstellen kann, die durch die Mitnahme der mobilen Datenverarbeitungsvorrichtung auch außerhalb des Feldhäckslers verfügbar sind.

Die mobile Datenverarbeitungsvorrichtung wird unabhängig vom Betriebszustand des Feldhäckslers betrieben. Somit stehen der Bedienperson Informationen zu dem Feldhäcksler sowie durchzuführender Aufgaben auch dann zur Verfügung, wenn der Feldhäcksler zur Durchführung manueller Arbeiten abgeschaltet ist. Dies ist besonders vorteilhaft, wenn von dem Fahrerassistenzsystem vorgeschlagene zusätzliche Optimierungsmöglichkeiten oder Montage- bzw. Umbauarbeiten durchzuführen sind. Der Bedienperson können dazu entsprechende Anleitungen unabhängig vom Fahrerassistenzsystem zur Verfügung gestellt werden.

Die vorliegende Erfindung wird nachstehend anhand eines in den Zeichnungen dargestellten Ausführungsbeispieles näher erläutert.

Es zeigen:
- Fig. 1: eine schematische Darstellung eines Feldhäckslers;
- Fig. 2: eine schematische Darstellung der Struktur eines Einstellautomaten;
- Fig. 3: eine schematische Übersicht der Struktur eines Fahrerassistenzsystems;
- Fig. 4: eine schematische Darstellung einer grafischen Benutzerschnittstelle des Fahrerassistenzsystems gemäß Fig. 3;
- Fig. 5: eine schematische Darstellung eines Dialogmoduls des Fahrerassistenz-systems;
- Fig. 6: eine schematische Darstellung der grafischen Benutzerschnittstelle des Fahrerassistenzsystems gemäß Fig. 4 mit ausgewähltem Unterdialog;

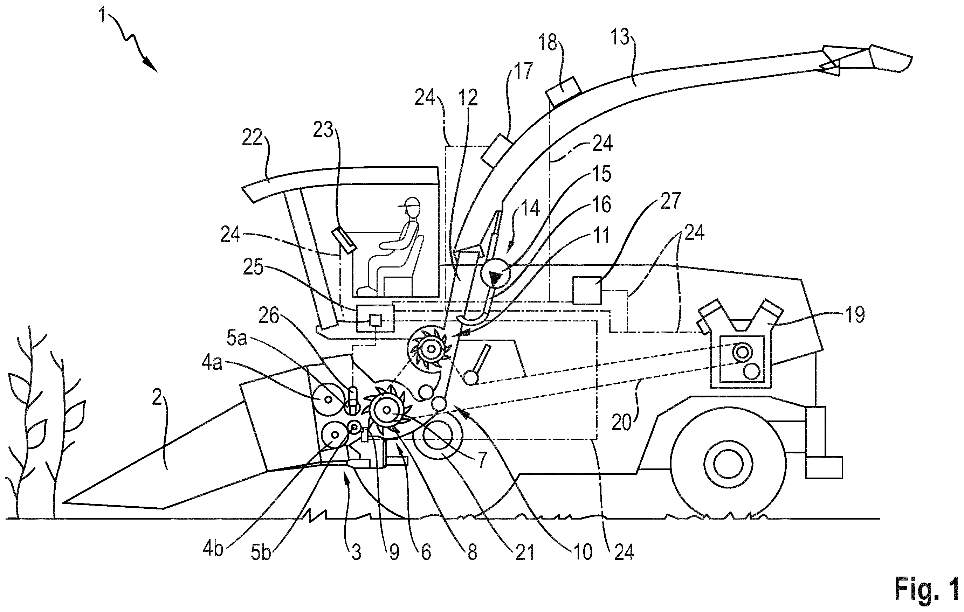

In Fig. 1 ist eine schematische Darstellung eines selbstfahrenden Feldhäckslers 1 in Seitenansicht gezeigt. Der Feldhäcksler 1 weist ein Vorsatzgerät 2 zum Ernten von, insbesondere stängeligem, Erntegut auf. Das Vorsatzgerät 2 kann unter anderem als sogenanntes Maisgebiss oder als Maispflücker ausgebildet sein. Für das Ernten von Gras kann das Vorsatzgerät 2 als ein Mähwerk ausgeführt sein.

Das von dem Vorsatzgerät 2 aufgenommene Erntegut wird einer Einzugsvorrichtung 3 zugeführt. Die Einzugsvorrichtung 3 umfasst zumindest ein erstes Paar Walzen 4a, 4b und ein zweites Paar Walzen 5a, 5b, die an einem Rahmen oder einem Gehäuse angeordnet sind. Die zumindest zwei Walzenpaare 4a, 4b und 5a, 5b dienen dem Einzug und Vorpressen des Erntegutes. Die Walzenpaare 4a, 4b und 5a, 5b bilden ein Erntegutbehandlungsmittel, welches einstellbar ist. So können beispielsweise die Vorpresskraft als auch die Antriebsgeschwindigkeit der Walzenpaare 4a, 4b und 5a, 5b verändert werden.

Der Einzugsvorrichtung 3 ist eine Häckselvorrichtung 6 nachgeordnet. Die Häckselvorrichtung 6 umfasst eine mit Häckselmessern 8 bestückte, rotierend angetriebene Häckseltrommel 7. Zum Zerkleinern des in Form einer verdichteten Erntegutmatte zugeführten Erntegutes wirken die mit der Häckseltrommel 7 rotierenden Häckselmesser 8 mit einer ortsfest angeordneten Gegenschneide 9 der Häckselvorrichtung 6 zusammen. Der Abstand der Gegenschneide 9 relativ zum Hüllkreis der Häckselmesser 8 lässt sich ein- bzw. nachstellen. Ein möglichst geringer Abstand trägt zu einem reduzierten Kraftbedarf beim Schneiden und zu einer konstanten Schnittqualität bei. Eine der Häckselvorrichtung 6 zugeordnete -nicht dargestellte - Schleifvorrichtung dient dazu, die Häckselmesser 8 bei Bedarf zu schärfen, um einer sich verschlechternden Häckselqualität wegen stumpfer Häckselmesser sowie einem erhöhten Energiebedarf beim Antrieb der Häckselvorrichtung zu begegnen.

Das aus der Häckselvorrichtung 6 austretende zerkleinerte Erntegut kann einer optional vorgesehenen Nachbearbeitungsvorrichtung 10 zugeführt werden. Die Nachbearbeitungsvorrichtung 10, auch als Konditioniereinrichtung oder Corncracker bezeichnet, dient dem Aufschließen von Maiskörnern, um die Verwertbarkeit bzw. Energieausbeute bei einem Einsatz als Futtermittel bzw. in einer Biogasanlage zu erhöhen. Derartige Nachbearbeitungsvorrichtungen 10 bestehen aus einem Walzenpaar, wobei die Walzen mit unterschiedlichen Drehzahlen angetrieben werden. Das Drehzahlverhältnis des Walzenpaares der Nachbearbeitungsvorrichtung 10 ist variierbar. Der Kornaufschluss wird insbesondere durch eine Spaltweite zwischen den beiden Walzen der Nachbearbeitungsvorrichtung 10 bestimmt. Je geringer die Spaltweite desto höher der Kornaufschluss. Die Spaltweite ist einstellbar. Die Nachbearbeitungsvorrichtung 10 ist bei Bedarf aus dem Gutflussweg des Feldhäckslers 1 entfernbar.

Von der Häckselvorrichtung 6 bzw. der optionalen Nachbearbeitungsvorrichtung 10 gelangt das zerkleinerte Erntegut zu einer Nachbeschleunigungsvorrichtung 11, welche das Erntegut durch einen Förderschacht 12 und eine sich daran anschließende als Auswurfkrümmer ausgebildete Auswurfvorrichtung 13 an ein benachbart zu dem Feldhäcksler 1 fahrendes - nicht dargestelltes - Transportfahrzeug überlädt. Im Bereich der Nachbeschleunigungsvorrichtung 11 ist eine Siliermitteldosiervorrichtung 14 angeordnet, die mittels einer Förderpumpe 15 mit veränderlichem Fördervolumen eine Flüssigkeit in den Förderschacht 12 einbringt. Hierzu ist ein in dem Förderschacht 12 endender, sich in Stromrichtung des Ernteguts öffnender Injektor 16 vorgesehen, wodurch die Flüssigkeit in fein verspritzter Form auf das vorbeiströmende Erntegut appliziert wird. An der Auswurfvorrichtung 13 ist zumindest ein Sensor 17 angeordnet, welcher zumindest zur Bestimmung des Feuchtigkeitsgehalts des zerkleinerten Erntegutes respektive der Trockenmasse eingerichtet ist. Der zumindest eine Sensor 17 kann als NIR-Sensor ausgeführt sein, welcher auch zur Detektion von Inhaltsstoffen wie Rohasche oder Rohproteingehalt des vorbeiströmenden Erntegutes eingerichtet ist. Die Zuordnung eines oder mehrerer weiterer Sensoren 18 zur Bestimmung der Häcksellänge, der Strömungsgeschwindigkeit des Erntegutes und/oder des Massenstroms des vorbeiströmenden Erntegutes zu der Auswurfvorrichtung 13 ist vorsehbar.

Zum Antreiben des Feldhäckslers 1 ist eine als Verbrennungsmotor ausgebildete Antriebsvorrichtung 19 vorgesehen, die mittels eines Riementriebs 20 die Häckselvorrichtung 6, die Nachbearbeitungsvorrichtung 10 und die Nachbeschleunigungsvorrichtung 11 antreibt. Das Vorsatzgerät 2 sowie die Einzugsvorrichtung 3 sind durch einen weiteren Antriebsstrang antreibbar, welcher mechanisch mit der Häckselvorrichtung 6 gekoppelt sein kann oder unabhängig von der Häckselvorrichtung 6 hydrostatisch betreibbar ist. Weiterhin ist ein, insbesondere hydrostatischer, Fahrantrieb 21 vorgesehen, mit welchem die Fahrgeschwindigkeit des Feldhäckslers 1 regelbar ist.

Der Feldhäcksler 1 weist eine Kabine 22 auf, in der eine Ein-/Ausgabevorrichtung 23 vorgesehen ist, welche einer Bedienperson des Feldhäckslers 1 zur Verfügung steht, um beispielsweise Betriebsparameter ein- und verstellen zu können und um die Bedienperson über aktuelle Betriebs- bzw. Erntebedingungen zu informieren. Die Ein-/Ausgabevorrichtung 23 steht durch ein Bussystem 24 mit einem Fahrerassistenzsystem 25 des Feldhäckslers 1 in Verbindung. Das Bussystem 24 verbindet darüber hinaus die Sensoren 17, 18 an der Auswurfvorrichtung 13 sowie einen Sensor 26 der Einzugsvorrichtung 3 und weitere - in Fig. 1 nicht dargestellte - Sensoren bzw. Sensorsysteme 34 und Aktuatoren 32 zur Überwachung sowie zur Einstellung und/oder Betätigung von Vorsatzgerät 2, Einzugsvorrichtung 3, Häckselvorrichtung 6, Schleifvorrichtung, Nachbearbeitungsvorrichtung 10, Nachbeschleunigungsvorrichtung 11, Siliermitteldosiervorrichtung 14, Auswurfvorrichtung 13 sowie den Fahrantrieb 16, die nachfolgend vereinfachend als Arbeitsorgane 30 bezeichnet werden, mit dem Fahrerassistenzsystem 25. Die Sensoren 17, 18 sowie 26 werden nachfolgend mit dem Begriff Sensorsystem 34 verallgemeinernd bezeichnet.

Jedes dieser Arbeitsorgane 30 umfasst dabei zumindest ein einstellbares Erntegutbehandlungsmittel 31, mit dem das Erntegut beim Durchlaufen des Erntegutbehandlungsprozesses durch den Feldhäcksler 1 von der Aufnahme durch das Vorsatzgerät 2 bis zur Abgabe durch die Auswurfvorrichtung 13 manipuliert wird. Beispielsweise bilden im Fall der Einzugsvorrichtung 3 die zwei Walzenpaare 4a, 4b und 5a, 5b das Erntegutbehandlungsmittel 31. Im Fall der Häckselvorrichtung 6 bilden die Häckseltrommel 7 mit den darauf angeordneten Häckselmessern 8, die Gegenschneide 9 sowie ein Trommelboden eine Erntegutbehandlungsmittel 31. Die wenigstens eine Aktuatorik 32 eines jeweiligen Arbeitsorgans 30 dient dazu, das zumindest eine Erntegutbehandlungsmittel 31 eines Arbeitsorgans 30 entsprechend der jeweils vorliegenden Erntebedingungen einzustellen, zu verstellen und/oder zu betätigen. Die Sensoren bzw. Sensorsysteme 34 überwachen Betriebs- und arbeitsorganspezifische Parameter der Arbeitsorgane 30 bzw. des von diesen behandelten Ernteguts.

Weiterhin zeigt die Darstellung in Fig. 1 eine Kommunikationseinheit 27, welche an das Bussystem 24 angeschlossen ist. Die Kommunikationseinheit 27 ist zum Empfang der mittels des Bussystems 24 übertragenen Daten eingerichtet.

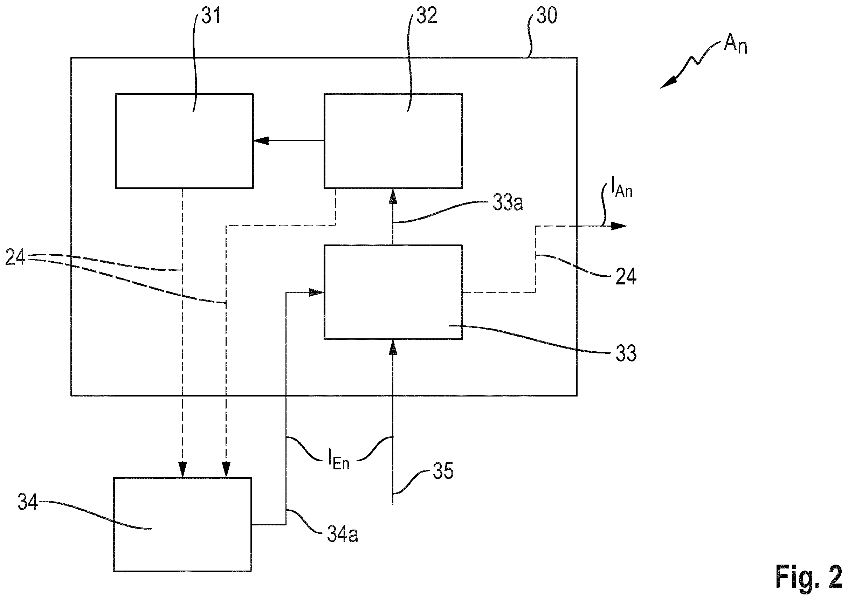

In Fig. 2 ist eine schematische Ansicht der Struktur eines Einstellautomaten Aₙ dargestellt. Das als Einstellautomat Aₙ ausgebildete Arbeitsorgan 30 umfasst zumindest ein Erntegutbehandlungsmittel 31, eine Aktuatorik 32 sowie eine Steuereinheit 33. Von der Steuereinheit 33 werden Steuersignale 33a an die Aktuatorik 32 mittels des Datenbusses 24 übermittelt, welche der Einstellung des zumindest einen Erntegutbehandlungsmittels 31 dienen. Ein Sensorsystem 34 überwacht das zumindest eine Erntegutbehandlungsmittel 31 des Arbeitsorgans 30 und gegebenenfalls die Aktuatorik 32. Die von dem Sensorsystem 34 generierten Sensordaten 34a werden mittels des Bussystems 24 an die Steuereinheit 33 zur Auswertung übertragen.

Darüber hinaus werden der Steuereinheit 33 externe Informationen 35 bereitgestellt, die beispielsweise von anderen Erntefahrzeugen, Arbeitsmaschinen und/oder einem zentralen Rechnersystem an den Feldhäcksler 1 übermittelt werden und den Erntegutbehandlungsprozess beeinflussen können. Die von dem Sensorsystem 34 bereitgestellten Sensordaten 34a sowie die externen Informationen 35 bilden Eingangssignale I_{En} des Einstellautomaten Aₙ. Mit I_{An} sind Ausgangssignale des Einstellautomaten Aₙ bezeichnet. Der Einstellautomat Aₙ optimiert die Arbeitsweise des Arbeitsorgans 30 autonom, d.h. der Einstellautomat Aₙ ist dazu eingerichtet, die erforderlichen Einstellungen von Betriebsparametern des Arbeitsorgans 30 kontinuierlich autonom zu bestimmen und vorzugeben. Durch den Einstellautomaten Aₙ werden an die jeweils vorliegenden Betriebs- und Erntebedingungen optimal angepasste Betriebsparameter bereitgestellt.

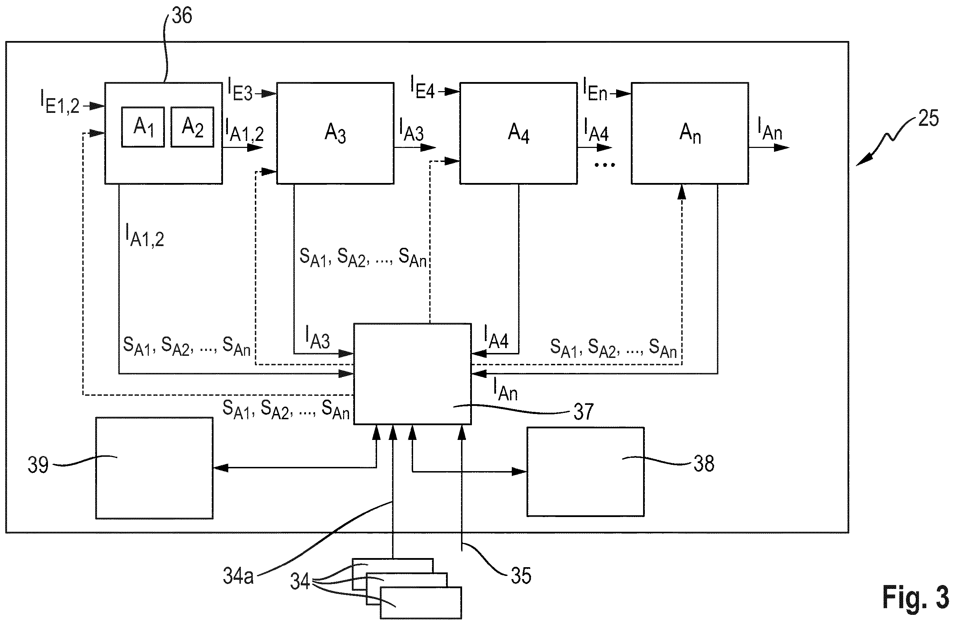

Die Darstellung in Fig. 3 zeigt eine schematische Übersicht der Struktur des Fahrerassistenzsystems 25. Das Fahrerassistenzsystem 25 umfasst mehrere Einstellautomaten A₁, A₂, A₃, A₄, ..., Aₙ. Prinzipiell arbeitet jeder der Einstellautomaten A₁, A₂, A₃, A₄, ..., Aₙ autark. Jedoch ist es denkbar, zwei Einstellautomaten A₁, A₂ zu einer Einheit zusammenzufassen, wie dies beispielhaft in Fig. 3 angedeutet ist. Das Zusammenfassen zweier Einstellautomaten A₁, A₂ ist dann sinnvoll, wenn die unmittelbare Wechselwirkung respektive Abhängigkeit zwischen diesen beiden Einstellautomaten A₁, A₂ bei einer jeweils autarken Optimierung keinen zusätzlichen Mehrwert liefert. So werden bei dem Feldhäcksler 1 der als Vorsatzgeräteautomat ausgeführte Einstellautomat A₁, welcher der Optimierung der Betriebsparameter des Vorsatzgerätes 2 dient, und der als Einzugsautomat ausgeführte Einstellautomat A₂, welcher der Optimierung der Betriebsparameter der Einzugsvorrichtung 3 dient, zu einem gemeinsamen Einstellautomaten zusammengefasst, der als Zuführautomat 36 bezeichnet wird.

Das Fahrerassistenzsystem 25 umfasst eine Rechenvorrichtung 37, einen Speicher 38 sowie eine grafische Benutzerschnittstelle 39. Die Rechenvorrichtung 37 ist zur Verarbeitung von in dem Speicher 38 hinterlegten Daten eingerichtet. Darüber hinaus empfängt und verarbeitet die Rechenvorrichtung 37 des Fahrerassistenzsystems 25 die Sensordaten 34a der Sensorsystem 34 sowie bereitgestellte externe Informationen 35.

Das Fahrerassistenzsystem 25 weist in dem Speicher 38 und/oder in einer Speichereinheit der Steuereinheiten 33 der Einstellautomaten A₁, A₂, A₃, A₄, ..., Aₙ hinterlegte Regelwerke auf, die den jeweiligen Einstellautomaten A₁, A₂, A₃, A₄, ..., Aₙ zugeordnet sind. Das dem jeweiligen Einstellautomaten A₁, A₂, A₃, A₄, ..., Aₙ zugeordnete Regelwerk bewirkt eine Optimierung der Arbeitsweise des jeweiligen Arbeitsorgans 30 unabhängig von der Arbeitsweise der anderen Arbeitsorgane 30. Die Regelwerke umfassen Expertenwissen sowie adaptierbare Kennlinien oder Kennlinienfelder.

In das steuerungshierarchisch übergeordnete Fahrerassistenzsystem 25 sind die Einstellautomaten A₁, A₂, A₃, A₄, ..., Aₙ integriert, wobei durch das Fahrerassistenzsystem 25 die Arbeitsweise jedes Einstellautomaten A₁, A₂, A₃, A₄, ..., Aₙ für sich genommen oder in Abhängigkeit von zumindest einem weiteren Einstellautomaten A₁, A₂, A₃, A₄, ..., Aₙ optimierbar ist. So werden von dem übergeordneten Fahrerassistenzsystem 25 jedem Einstellautomaten A₁, A₂, A₃, A₄, ..., Aₙ korrespondierende Eingangssignale I_{E1}, I_{E2}, I_{E3}, I_{E4}, ..., I_{En} bereitgestellt, die entsprechend dem jeweiligen Regelwerk der Einstellautomaten A₁, A₂, A₃, A₄, ..., Aₙ verarbeitet werden. Zur Optimierung der Arbeitsweise des jeweiligen Einstellautomaten A₁, A₂, A₃, A₄, ..., Aₙ wird ein Ausgangssignal I_{A1}, I_{A2}, I_{A3}, I_{A4}, ..., I_{An} generiert, welches der Ansteuerung der jeweiligen Aktuatorik 32 des von dem Einstellautomaten A₁, A₂, A₃, A₄, ..., Aₙ angesteuerten Arbeitsorgans 30 dient.

Darüber hinaus werden die Ausgangssignale I_{A1}, I_{A2}, I_{A3}, I_{A4}, ..., I_{An} an die Rechenvorrichtung 37 des Fahrerassistenzsystems 25 übertragen. Das Fahrerassistenzsystem 25 stellt die Ausgangssignale I_{A1}, I_{A2}, I_{A3}, I_{A4}, ..., I_{An} als zusätzliche Steuereingangssignale S_{A1}, S_{A2}, S_{A3}, S_{A4}, ..., S_{An} den anderen Einstellautomaten A₁, A₂, A₃, A₄, ..., Aₙ zur Verfügung. Dadurch stehen dem Fahrerassistenzsystem 25 und den Einstellautomaten A₁, A₂, A₃, A₄, ..., Aₙ zusätzliche Informationen zur Verfügung, wodurch es ermöglicht wird, auftretende Wechselwirkungen aufgrund von geänderten Einstellungen eines Arbeitsorgans 30 auf ein oder mehrere andere Arbeitsorgane 30 bei deren Optimierung zu berücksichtigen.

Die grafische Benutzeroberfläche 39 des Fahrerassistenzsystems 25 dient der Kommunikation zwischen einer Bedienperson des Feldhäckslers 1 und dem Fahrerassistenzsystem 25. Der Begriff "Kommunikation" umfasst dabei das Visualisieren von sensorisch erfassten Daten, Betriebsparametern, Erntegutprozessparametern, Arbeitsweisen, zur Auswahl stehender Strategien sowie sonstige Informationen, welche für die Bedienperson zur Bedienung sowie für eine Entscheidungsfindung zur Ansteuerung der Arbeitsorgane 30 und des Feldhäckslers 1 erforderlich sind.

Die Kommunikation kann dabei interaktiv zwischen der Bedienperson und dem Fahrerassistenzsystem 25 natürlichsprachig in Form eines Dialogs erfolgen. Ebenfalls umfasst von dem Begriff "Kommunikation" ist die manuelle Eingabe von Befehlen, Auswahlbestätigungen, Daten und dergleichen durch die Bedienperson, was gleichfalls, zumindest in Teilen, in Dialogform geschieht. Hierzu umfasst das Fahrerassistenzsystem 25 ein Dialogmodul 40, welches eine dialoggeführte Bedienung des Fahrerassistenzsystems 25 durch die Bedienperson ermöglicht. Darüber hinaus kann das Fahrerassistenzsystem 25 in einem Automatikmodus betrieben werden. Das Dialogmodul 40 wird entweder von der Bedienperson aktiviert oder, im Automatikmodus, automatisch bei einem Vorliegen einer kritischen Arbeitsweise des Feldhäckslers 1 respektive zumindest eines Arbeitsorgans 30.

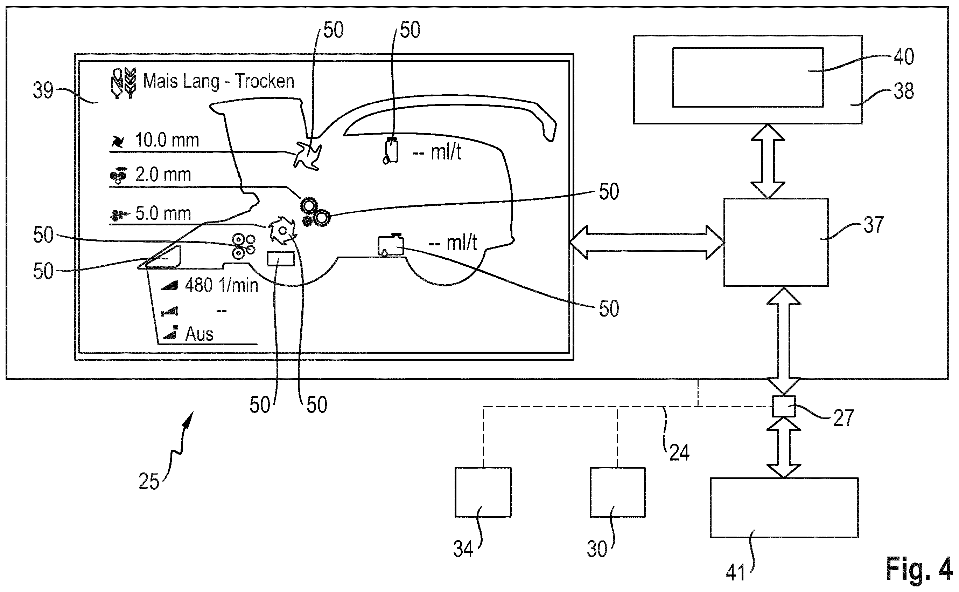

Fig. 4 zeigt eine schematische Darstellung der grafischen Benutzerschnittstelle 39 des Fahrerassistenzsystems 25 gemäß Fig. 3. Das in dem Speicher 38 hinterlegte Dialogmodul 40 wird von der Rechenvorrichtung 37 ausgeführt und gestattet die natürlichsprachige Interaktion der Bedienperson mit dem Fahrerassistenzsystem 25. Die grafische Benutzerschnittstelle 39 zeigt beispielhaft eine Übersicht dargestellter Informationen des Feldhäckslers 1, wie Fahrgeschwindigkeit und Drehzahl der Antriebsvorrichtung 19, sowie von dessen Arbeitsorganen 30. Hierzu ist der Feldhäcksler 1 in Form einer vereinfachten Grafik dargestellt. Einzelne Arbeitsorgane 30 des Feldhäckslers 1, zu denen Informationen hinsichtlich eingestellter Betriebsparameter angezeigt werden, sind visuell hervorgehoben dargestellt, beispielsweise durch Piktogramme 50. Die als berührungsempfindlicher Bildschirm ausgebildete Eingabe-Ausgabevorrichtung 23 des Fahrerassistenzsystems 25 ermöglicht es der Bedienperson durch eine gezielte Anwahl der einzelnen Piktogramme 50 das Dialogmodul 40 zu aktivieren.

So zeigt die Darstellung in Fig. 4 beispielhaft die Einzugsvorrichtung 3, die Häckselvorrichtung 6, die Nachbearbeitungsvorrichtung 10 sowie die Nachbeschleunigungsvorrichtung 11 jeweils als ein Piktogramm 50. Zu diesen Arbeitsorganen 30 werden zumindest teilweise korrespondierende Betriebsparameter angezeigt, wie der Walzenabstand des ersten Paar Walzen 4a, 4b und des zweiten Paar Walzen 5a, 5b der Einzugsvorrichtung 3 sowie der Walzen der Nachbearbeitungsvorrichtung 10. Ebenfalls als Piktogramm 50 dargestellt ist eine Schleifvorrichtung zum Schleifen der Häckselmesser 8 der Häckselvorrichtung 6.

Des Weiteren ist in Fig. 4 eine mobile Datenverarbeitungsvorrichtung 41 schematisch dargestellt, welche mittels der Kommunikationseinheit 27 mit dem Fahrerassistenzsystem 25 signaltechnisch verbindbar ist. Die mobile Datenverarbeitungsvorrichtung 41 ist vorzugsweise als Smartphone, Tablet-PC o der dergleichen ausgeführt, so dass eine Verwendung auch außerhalb des Feldhäckslers 1 möglich ist. Die mobile Datenverarbeitungsvorrichtung 41 verfügt im Allgemeinen über eine berührungsempfindliche Anzeigeeinheit, welche dadurch auch zur Eingabe von Daten eingerichtet ist.

Die Kommunikationseinheit 27 ist mit zumindest einer ersten Schnittstelle ausgestattet, die mit dem Bussystem 24 des Feldhäckslers 1 verbindbar ist, so dass durch das Bussystem 24 transportierte Signale der Arbeitsorgane 30, der Sensorsysteme 34 sowie der Einstellautomaten A₁, A₂, A₃, A₄, ..., Aₙ empfangbar sind. Eine zweite Schnittstelle dient zum Verarbeiten und Aufbereiten von Signalen des Bussystems 24 und zum drahtlosen Übermitteln an die mobile Datenverarbeitungsvorrichtung 41. Die Kommunikationseinheit 27 ist mit dem Fahrerassistenzsystem 25 datentechnisch verbunden, so dass von der mobilen Datenverarbeitungsvorrichtung 41 generierte Daten mittels der Kommunikationseinheit 27 an das Fahrerassistenzsystem 25 übertragbar sind, insbesondere dem Dialogmodul 40 zuführbar sind.

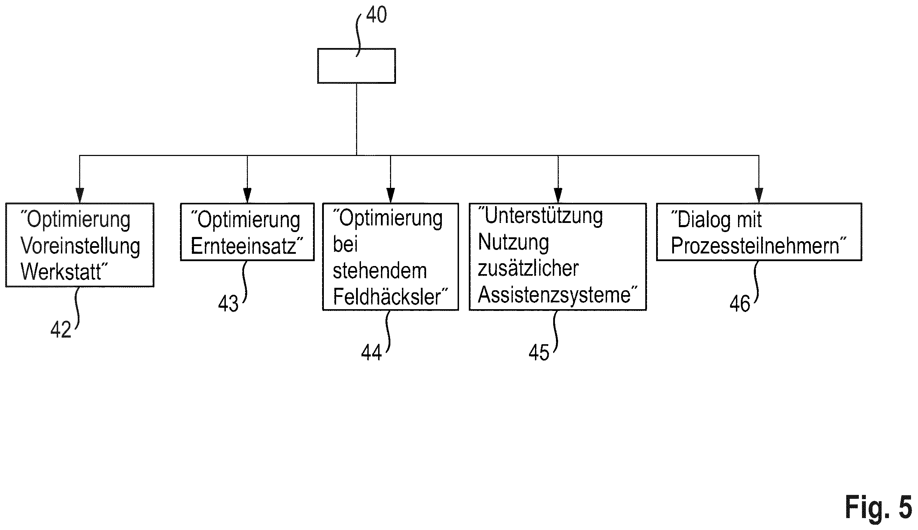

Das Dialogmodul 40 bietet bei seiner Aktivierung unterschiedliche Unterdialoge, welche je nach Betriebssituation des Feldhäckslers 1 grundsätzlich zur Verfügung stehen oder von einem Vorliegen einer konkreten Betriebssituation abhängig sein können. Eine Übersicht möglicher Unterdialoge ist in Fig. 5 dargestellt. So ist ein Unterdialog "Optimierung Voreinstellung Werkstatt" 42, "Optimierung Ernteeinsatz" 43, "Optimierung bei stehendem Feldhäcksler" 44, "Unterstützung Nutzung zusätzlicher Assistenzsysteme" 45 und "Dialog mit Prozessteilnehmer" 46 vorgesehen.

Der Unterdialog "Optimierung Voreinstellung Werkstatt" 42 bietet der Bedienperson vor der Aufnahme des Erntebetriebs die Möglichkeit, dialoggeführt den Feldhäcksler 1 vorzubereiten, umzurüsten oder zu warten. Eine Umrüstung kann beispielsweise bei einem Wechsel von der Maisernte auf die Grasernte sinnvoll sein, bei dem die Nachbehandlungsvorrichtung 10 aus dem Gutfluss entfernt wird. Darüber hinaus erfordert ein solcher Erntegutwechsel ein anderes Vorsatzgerät 2, welches bereits an dem Feldhäcksler 1 angebracht wird, um von diesem zum Einsatzort verbracht zu werden.

Der Unterdialog "Optimierung Ernteeinsatz" 43 bildet den Schwerpunkt, da innerhalb dieses Unterdialoges 43 die Optimierung der Arbeitsorgane 30 vorgenommen wird. Darüber hinaus bietet dieser Unterdialog 43 zusätzliche Optimierungsmöglichkeiten, die eines manuellen Eingriffs durch die Bedienperson im Stillstand des Feldhäckslers 1 bedürfen. Diese zusätzlichen Optimierungsmöglichkeiten können beispielsweise das Einstellen von Abstreifern an der Einspeisetrommel des als Maisgebiss ausgeführten Vorsatzgerätes oder der Abstand von Einweisfingern sein. Da solche zusätzlichen Optimierungsmöglichkeiten nur im Stillstand des Feldhäckslers 1 und seiner Arbeitsorgane 30 durchführbar sind, können diese zusätzlichen Optimierungsmöglichkeiten als Aufgaben in dem Speicher 38 hinterlegt und auf der grafischen Benutzeroberfläche 39 als auszuführende Aufgaben ausgewiesen werden.

Die mobile Datenverarbeitungsvorrichtung 41 vereinfacht dabei die Ausführung dieser Aufgabe, da die mobile Datenverarbeitungsvorrichtung 41 außerhalb des Feldhäckslers 1 mitgeführt werden kann und dabei mittels der Kommunikationseinheit 27 mit dem Feldhäcksler 1 respektive den Arbeitsorganen 30 bzw. dem Fahrerassistenzsystem 25 kommunizieren kann.

Der Unterdialog "Optimierung bei stehendem Feldhäcksler" 44 bietet die Möglichkeit, der Bedienperson bei den manuell durchzuführenden zusätzlichen Optimierungsmöglichkeiten eine Schritt-für-Schritt-Anleitung darzustellen, die ergänzend durch Informationen hinsichtlich des Nutzens der zusätzlichen Optimierungsmöglichkeit und Bilder erläutert wird.

Im Unterdialog "Unterstützung Nutzung zusätzlicher Assistenzsysteme" 45 wird der Bedienperson Unterstützung bei der Einstellung zusätzlicher Assistenzsystem gegeben, die nicht unmittelbar der Optimierung der Betriebsweise der Arbeitsorgane 30 dienen. So gibt es für den Feldhäcksler 1 ein Überladeassistenzsystem, welches den Vorgang des Überladens des gehäckselten Erntegutes auf einen Transportwagen regelt, um Erntegutverluste zu minimieren. Ein weiteres zusätzliches Assistenzsystem stellt ein Fahrgeschwindigkeitsassistenzsystem dar, mit dem die Fahrgeschwindigkeit bei durch die Bedienperson vorgegebener Auslastung der Antriebsvorrichtung 19 in Abhängigkeit vom Erntegutdurchsatz und der Auslastung automatisch einstellbar ist.

Der Unterdialog "Dialog mit Prozessteilnehmer" 46 bietet die Möglichkeit, die Reichweite des Fahrerassistenzsystems 25 über die Arbeitsorgane 30 des Feldhäckslers 1 hinaus auszudehnen, um Optimierungen der Einstellung von Arbeitsorganen 30 zu bewirken, die von Arbeitsergebnissen nachgelagerter Erntegutbearbeitungsprozesse beeinflusst werden können. Beispielsweise wird die Verdichtbarkeit von Erntegut auf einem Silo durch die Häcksellänge bestimmt. Dabei lassen sich in unteren Schichten eines Silos Erntegut mit größerer Häcksellänge verdichten, während mit zunehmender Schichthöhe die Häcksellänge abnehmen muss, um eine vergleichbare Verdichtbarkeit zu erreichen bzw. beizubehalten. Mittels des Unterdialogs "Dialog mit Prozessteilnehmer" 46 besteht für einen Fahrer eines Verdichtungsfahrzeugs auf einem Silo als ein Prozessteilnehmer innerhalb einer Ernteprozesskette die Möglichkeit der Bedienperson des Feldhäckslers 1 diese geänderte Anforderung mitzuteilen. Der Bedienperson des Feldhäckslers 1 wird diese geänderte Anforderung auf der grafischen Benutzeroberfläche 39 angezeigt. Mittels des Fahrerassistenzsystems 25 kann die Bedienperson des Feldhäckslers 1 die Häcksellänge der Anforderung entsprechend anpassen, wobei die Einstellungen der Betriebsparameter der Arbeitsorgane 30, deren Zusammenwirken Einfluss auf die Häcksellänge hat, von den jeweiligen Einstellautomaten A₁, A₂, A₃, A₄, ..., Aₙ optimiert werden.

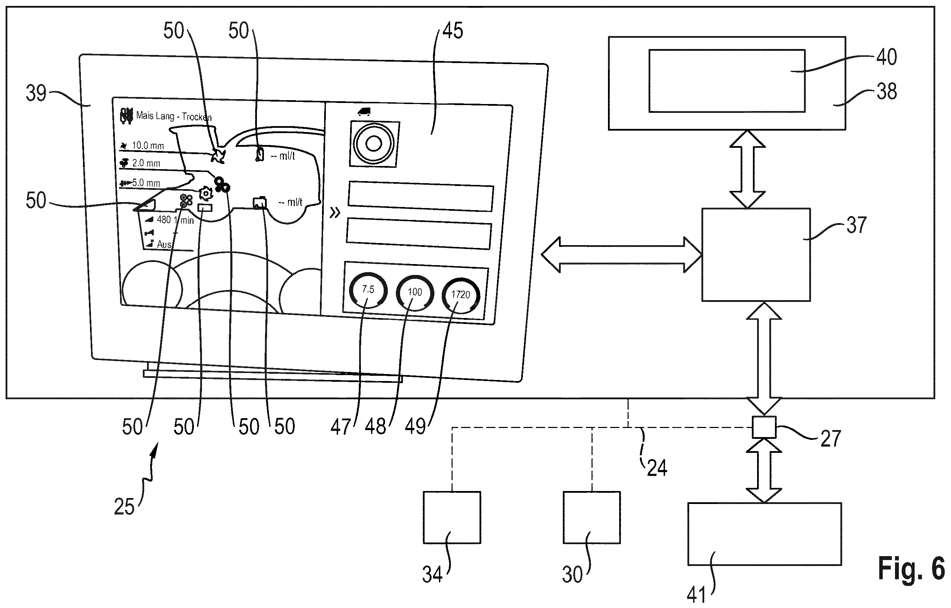

In Fig. 6 ist eine schematische Darstellung der grafischen Benutzerschnittstelle 39 des Fahrerassistenzsystems 25 gemäß Fig. 4 mit ausgewähltem Unterdialog "Unterstützung Nutzung zusätzlicher Assistenzsysteme" 45 gezeigt. Dargestellt ist das Fahrgeschwindigkeitsassistenzsystem, durch das eine Fahrgeschwindigkeit 47 automatisch geregelt wird. Die Bedienperson kann eine gewünschte Auslastung der Antriebsvorrichtung 19 festlegen, indem eine Antriebsdrehzahl 49 entsprechend einstellt wird. Die Antriebsvorrichtung 19 des Feldhäckslers 1 strebt nun permanent die vorgegebene Auslastung an. Bei einer plötzlichen Bestandszunahme wird automatisch die Fahrgeschwindigkeit 47 reduziert. Nimmt der Bestand wieder ab, steigert das Fahrgeschwindigkeitsassistenzsystem die Fahrgeschwindigkeit 47 des Feldhäckslers 1 wieder, bis die vorgegebene Auslastung der Antriebsvorrichtung 19 erreicht ist. Die Regelung basiert dabei auf der Erkennung von Durchsatzvolumen 48 und Auslastung respektive Antriebsdrehzahl 49.

Die in das Fahrerassistenzsystem 25 integrierten Einstellautomaten A₁, A₂, A₃, A₄, ..., Aₙ umfassen neben dem Zuführautomaten, in dem der Vorsatzgeräteautomat und der Einzugsautomat funktional zusammengeführt sind, einen Häckselautomaten, einen Schneidschärfeautomaten, einen Nachbearbeitungsautomaten, einen Siliermittelautomaten, einen Auswurfautomaten sowie einen Nebenaggregatoptimierungsautomaten.

Dem Häckselautomaten kommt die Funktion zu, in Abhängigkeit von einer auswählbaren arbeitsorganspezifischen Strategie die Häcksellänge zu optimieren. Die Anpassung der Häcksellänge geschieht vor dem Hintergrund einer Strategieauswahl "Leistung" oder "Arbeitsqualität", welcher die Ernteprozessparameter "Verdichtbarkeit" oder "Flächenleistung" zugrunde liegen. Bei der Strategieauswahl "Arbeitsqualität" wird eine gewünschte Verdichtbarkeit des Erntegutes angestrebt, welche bei einem sensorisch bestimmten relativen Trockenmassegehalt und einer damit korrespondierenden Häcksellänge erreichbar ist. Der Zusammenhang zwischen Verdichtbarkeit, relativem Trockenmassegehalt und Häcksellänge ist in zumindest einem Kennlinienfeld hinterlegbar, welches einen wesentlichen Teil des Regelwerks des Häckselautomaten bildet. Bei der Strategieauswahl "Leistung" steht der Effizienzgedanke beim Betreiben des Feldhäcksler 1 im Vordergrund. Für eine möglichst große Flächenleitung soll der Kraftstoffverbrauch minimiert werden, so dass die Häcksellänge so eingestellt wird, wie für eine Verdichtbarkeit erforderlich ist.

Die Qualität des Häckselprozesses als auch der Leistungsbedarf der Häckselvorrichtung 6 wird durch die Schärfe der Häckselmesser 8 sowie die Position respektive dem Abstand der Gegenschneide 9 zum Hüllkreis der rotierenden Häckselmesser 8 beeinflusst. An dieser Stelle greift der Schneidschärfeautomat ein, welcher das Nachschleifen der Häckselmesser selbsttätig initiieren oder zumindest der Bedienperson vorschlagen kann, wenn die Qualität und oder der Leistungsbedarf der Häckselvorrichtung 6 dies erfordern. Da das Schleifen der Häckselmesser 8 und ein gegebenenfalls erforderliches Nachstellen der Gegenschneide 9 zu einer Unterbrechung des Erntevorgangs führen würde, erfolgt eine Koordination des Zeitpunkts der Durchführung des Schleifprozesses und der Verstellung der Gegenschneiden durch das steuerungshierarchisch übergeordnete Fahrerassistenzsystem 25.

Sowohl die Häcksellänge als auch die Qualität des Häckselprozesses wird durch ein, insbesondere optisches, Sensorsystem 34 überwacht, dessen Daten an den Zuführautomaten, den Häckselautomaten und den Schneidschärfeautomaten übermittelt werden.

Bei der Ernte von Mais kann die Nachbehandlungsvorrichtung 10 zum Einsatz kommen, welchem dem Aufschließen der Körner dient. Die Nachbehandlungsvorrichtung 10 wird von dem Nachbearbeitungsautomaten gesteuert bzw. geregelt. Dabei wird die Güte des Kornaufschlusses als ein Ernteprozessparameter durch das Sensorsystem 34 erfasst, welches auch der Überwachung und Bestimmung der Häcksellänge dient. Der Nachbearbeitungsautomat steuert bzw. regelt den Abstand der Walzen der Nachbehandlungsvorrichtung 10. Zudem kann vorgesehen sein, dass der Nachbearbeitungsautomat auch die Differenzdrehzahl einstellt. Die Ansteuerung der Nachbehandlungsvorrichtung 10 erfolgt ebenfalls anhand von auswählbaren arbeitsorganspezifischen Strategien. Dabei stehen sich insbesondere die Strategien "Arbeitsqualität" und "Leistung" einander gegenüber. Ein zunehmender Kornaufschluss erfordert einen geringeren Abstand der Walzen zueinander, so dass bei gegebenem Durchsatz an Erntegut der Leistungsbedarf der Nachbehandlungsvorrichtung 10 signifikant ansteigt. Der Nachbearbeitungsautomat ermöglicht es, mittels der von dem Sensorsystem 34 bereitgestellten Daten über die Güte des Kornaufschlusses Einstellungen zu bestimmen, bei denen ein ausreichender Kornaufschluss bei möglichst geringem Leistungsbedarf erreicht werden kann.

In Vorbereitung auf das Einlagern des gehäckselten Erntegutes in einem Silo wird das Erntegut im Feldhäcksler 1 mit einem Siliermittel beaufschlagt, um unter anderem den Gärprozess zu begünstigen und die Haltbarkeit des Erntegutes zu verbessern. Das Siliermittel oder ein Gemisch aus einem Siliermittel und Wasser wird mittels der Siliermitteldosiervorrichtung 14 auf das vorbeiströmende Erntegut aufgebracht. Der Sensor 17 ist zur sensorischen Erfassung von Inhaltstoffen des gehäckselten Ernteguts eingerichtet. Aufgrund der Auswertung wird die Siliermitteldosiervorrichtung 14 von dem Siliermittelautomaten angesteuert, um im Rahmen einer ausgewählten Strategie "Arbeitsqualität" im Sinne von guter Silierbarkeit oder "Kosten", das heißt geringstmöglichem mengenmäßigen Einsatz an Siliermittel, eine Optimierung zu erreichen.

Der Auswurfautomat steuert oder regelt die Arbeitsweise der Nachbeschleunigungsvorrichtung 11 und der Auswurfvorrichtung 13 unter Berücksichtigung der konträren Strategien "Effizienz" und "Leistung". Mittels eines weiteren Sensorsystems 34, welches der Auswurfvorrichtung zugeordnet sein kann, können die Strömungsgeschwindigkeit und das Strömungsverhalten respektive der Gutfluss des Erntegutes bestimmt und überwacht werden. Durch das für den Auswurfautomaten spezifische Regelwerk lassen sich die Einstellungen bestimmen, die einerseits einen guten Gutfluss und andererseits einen möglichst geringen Leistungsbedarf der Nachbeschleunigungsvorrichtung 11 erfordern.

Dem Nebenaggregatoptimierungsautomat kommt die Aufgabe zu, neben den zentralen Einstellautomaten A₁, A₂, A₃, A₄, ..., Aₙ der jeweiligen Arbeitsorgane 30, weitere Optimierungen hinsichtlich "Arbeitsqualität", "Leistung" sowie "Effizienz" zu bewirken. Das Regelwerk des Nebenaggregatoptimierungsautomaten basiert auf den gleichen Voraussetzungen wie die anderen Regelwerke der Einstellautomaten A₁, A₂, A₃, A₄, ..., Aₙ. Beispielsweise kann der Nebenaggregatoptimierungsautomat von dem Sensorsysteme 34, welches den Durchsatz an Erntegut bestimmt, mit den entsprechenden durchsatzspezifischen Sensordaten 34a versorgt werden, um eine durchsatzabhängige Einstellung des Trommelbodens der Häckselvorrichtung 6 durchzuführen, wodurch sich der Leistungsbedarf der Häckselvorrichtung 6 reduzieren lässt. Denkbar ist auch, dass bei der Ernte von Gras der Abstand einer Schachtwand des Förderschachts 12 zu der Nachbeschleunigungsvorrichtung 11 verstellt wird, um eine höhere Austrittsgeschwindigkeit zu erreichen.

**Bezugszeichenliste**

| | | | |
|---|---|---|---|
| 1 | Feldhäcksler | 27 | Kommunikationseinheit |
| 2 | Vorsatzgerät | 30 | Arbeitsorgan |
| 3 | Einzugsvorrichtung | 31 | Erntegutbehandlungsmittel |
| 4a | Walze | 32 | Aktuatorik |
| 4b | Walze | 33 | Steuereinheit |
| 5a | Walze | 33a | Steuersignal |
| 5b | Walze | 34 | Sensorsystem |
| 6 | Häckselvorrichtung | 34a | Sensordaten |
| 7 | Häckseltrommel | 35 | Externe Informationen |
| 8 | Häckselmesser | 36 | Zuführautomat |
| 9 | Gegenschneide | 37 | Rechenvorrichtung |
| 10 | Nachbearbeitungsvorrichtung | 38 | Speicher |
| 11 | Nachbeschleunigungsvorrichtung | 39 | Grafische Benutzeroberfläche |
| 12 | Förderschacht | 40 | Dialogmodul |
| 13 | Auswurfvorrichtung | 41 | Mobile Datenverarbeitungsvorrichtung |
| 14 | Siliermitteldosiervorrichtung | 42 | Unterdialog |
| 15 | Förderpumpe | 43 | Unterdialog |
| 16 | Injektor | 44 | Unterdialog |
| 17 | Sensor | 45 | Unterdialog |
| 18 | Sensor | 46 | Unterdialog |
| 19 | Antriebsvorrichtung | 47 | Fahrgeschwindigkeit |
| 20 | Riementrieb | 48 | Durchsatzvolumen |
| 21 | Fahrantrieb | 49 | Antriebsdrehzahl |
| 22 | Kabine | 50 | Piktogramm |
| 23 | Ein-/Ausgabevorrichtung | A₁ | Einstellautomat |
| 24 | Bussystem | A₂ | Einstellautomat |
| 25 | Fahrerassistenzsystem | A₃ | Einstellautomat |
| 26 | Sensor | A₄ | Einstellautomat |
| Aₙ | Einstellautomat | | |
| I_{E1} | Eingangssignal | | |
| I_{E2} | Eingangssignal | | |
| I_{E3} | Eingangssignal | | |
| I_{E4} | Eingangssignal | | |
| I_{En} | Eingangssignal | | |
| I_{A1} | Ausgangssignal | | |
| I_{A2} | Ausgangssignal | | |
| I_{A3} | Ausgangssignal | | |
| I_{A4} | Ausgangssignal | | |
| I_{An} | Ausgangssignal | | |
| S_{A1} | Steuereingangssignal | | |
| S_{A2} | Steuereingangssignal | | |
| S_{A3} | Steuereingangssignal | | |
| S_{A4} | Steuereingangssignal | | |
| S_{An} | Steuereingangssignal | | |

## Patentansprüche

1. Feldhäcksler (1), umfassend
- mehrere Arbeitsorgane (30) zur Durchführung eines Erntegutbearbeitungsprozesses,
- ein Fahrerassistenzsystem (25), welches einen Speicher (38) zum Hinterlegen von Daten und eine Rechenvorrichtung (37) zur Verarbeitung von in dem Speicher hinterlegten Daten sowie eine grafische Benutzerschnittstelle (39) aufweist,
- wobei die Arbeitsorgane (30) zumindest ein einstellbares Erntegutbehandlungsmittel (31), wenigstens eine Aktuatorik (32) zur Einstellung und/oder Betätigung des zumindest einen Erntegutbehandlungsmittels (31) sowie eine Steuereinheit (33) zur Ansteuerung der Aktuatorik (32) aufweisen,
**dadurch gekennzeichnet,**
**dass** das jeweilige Arbeitsorgan (30) als ein Einstellautomat (A₁, A₂, A₃, A₄, Aₙ) ausgebildet ist,
wobei das als Einstellautomat (A₁, A₂, A₃, A₄, Aₙ) ausgebildete Arbeitsorgan (30) das zumindest eine Erntegutbehandlungsmittel (31) die Aktuatorik (32) sowie die Steuereinheit (33) in der Weise umfasst, dass von der Steuereinheit (33) Steuersignale (33a) an die Aktuatorik (32) mittels eines Datenbusses (24) übermittelt werden, welche der Einstellung des zumindest einen Erntegutbehandlungsmittels (31) dienen, wobei ein Sensorsystem (34) das zumindest eine Erntegutbehandlungsmittel (31) des Arbeitsorgans (30) und gegebenenfalls die Aktuatorik (32) überwacht,
die von dem Sensorsystem (34) generierten Sensordaten (34a) mittels des Bussystems (24) an die Steuereinheit (33) zur Auswertung übertragen werden,
wobei die von dem Sensorsystem (34) bereitgestellten Sensordaten (34a) sowie externe Informationen (35) die Eingangssignale (I_{EN}) des Einstellautomaten (A₁, A₂, A₃, A₄, Aₙ) bilden und der Einstellautomat (A₁, A₂, A₃, A₄, Aₙ) dazu eingerichtet ist, die erforderlichen Einstellungen von Betriebsparametern des Arbeitsorgans (30) kontinuierlich autonom zu bestimmen und vorzugeben,
wobei zumindest einem Teil der Arbeitsorgane (30) jeweils ein Sensorsystem (34) zugeordnet ist, welches zur Erfassung von Signalen zur Bestimmung von Betriebsparametern sowie arbeitsorganspezifischen Ernteprozessparameter eingerichtet ist, wobei das Fahrerassistenzsystem (25) dazu eingerichtet ist, die Signale des jeweiligen Sensorsystems (34) zu empfangen und auszuwerten,
wobei die Sensorsysteme (34) dazu eingerichtet sind, die von dem jeweiligen Arbeitsorgan (30) erfassten Signale zur Bestimmung der arbeitsorganspezifischen Ernteprozessparameter den damit korrespondierenden Einstellautomaten (A₁, A₂, A₃, A₄, Aₙ) als Eingangssignale (I_{E1}, I_{E2}, I_{E3}, I_{E4}, I_{En}) bereitzustellen,
und wobei eine Vielzahl von Einstellautomaten (A₁, A₂, A₃, A₄, Aₙ) in das steuerungshierarchisch übergeordnete Fahrerassistenzsystem (25) integriert sind, wobei durch das Fahrerassistenzsystem (25) die Arbeitsweise jedes Einstellautomaten (A₁, A₂, A₃, A₄, Aₙ) für sich genommen oder in Abhängigkeit von zumindest einem weiteren Einstellautomaten (A₁, A₂, A₃, A₄, Aₙ) optimierbar, sind und , dass das Fahrerassistenzsystem (25) in dem Speicher (38) oder in einer Speichereinheit der Steuereinheiten (33) hinterlegte Regelwerke aufweist, die den jeweiligen Einstellautomaten (A₁, A₂, A₃, A₄, Aₙ) zugeordnet sind, wobei das dem jeweiligen Einstellautomaten (A₁, A₂, A₃, A₄, Aₙ) zugeordnete Regelwerk eine Optimierung der Arbeitsweise des jeweiligen Arbeitsorgans (30) unabhängig von der Arbeitsweise der anderen Arbeitsorgane (30) bewirkt und dass das Fahrerassistenzsystem (25) die Einstellautomaten (A₁, A₂, A₃, A₄, Aₙ) des Feldhäckslers (1) als Supervisor ansteuert, so dass sich eine Optimierung eines Gesamtarbeitsprozesses des Feldhäckslers (1) einstellt und
**dass** das übergeordnete Fahrerassistenzsystem (25) dazu eingerichtet ist jedem Einstellautomaten (A₁, A₂, A₃, A₄, ..., Aₙ) korrespondierende Eingangssignale (I_{E1}, I_{E2}, I_{E3}, I_{E4}, ..., I_{En}) bereitzustellen, die entsprechend dem jeweiligen Regelwerk der Einstellautomaten (A₁, A₂, A₃, A₄, ..., Aₙ) verarbeitet werden, wobei zur Optimierung der Arbeitsweise des jeweiligen Einstellautomaten (A₁, A₂, A₃, A₄, ..., Aₙ) ein Ausgangssignal (I_{A1}, I_{A2,} I_{A3}, I_{A4}, ..., I_{An}) generiert wird, welches der Ansteuerung der jeweiligen Aktuatorik 32 des von dem Einstellautomaten (A₁, A₂, A₃, A₄, ..., Aₙ) angesteuerten Arbeitsorgans 30 dient und
wobei das Fahrerassistenzsystem (25) eingerichtet ist, die Ausgangsignale (I_{A1}, I_{A2,} I_{A3}, I_{A4}, ..., I_{An}) des jeweiligen Einstellautomaten (A₁, A₂, A₃, A₄, Aₙ) den anderen Einstellautomaten (A₁, A₂, A₃, A₄, Aₙ) als zusätzliche Steuereingangssignale (S_{A1}, S_{A2}, S_{A3}, S_{A4}, S_{An}) bereitzustellen.

2. Feldhäcksler (1) nach Anspruch 1 , **dadurch gekennzeichnet, dass** das Fahrerassistenzsystem (25) zur Optimierung der Arbeitsweise der einzelnen Arbeitsorgane (30) in dem Speicher (38) hinterlegte, auswählbare arbeitsorganspezifische Strategien aufweist.

3. Feldhäcksler (1) nach Anspruch 2, **dadurch gekennzeichnet, dass** die auswählbaren Strategien jeweils auf eine Zielvorgabe der Einstellung oder der Optimierung mindestens eines Ernteprozessparameters durch Vorgabe zumindest eines Betriebsparameters zumindest eines der Arbeitsorgane (30) gerichtet sind.

4. Feldhäcksler (1) nach einem der vorangehenden Ansprüche, **dadurch gekennzeichnet, dass** eine Aktivierung des Fahrerassistenzsystems (25) durch eine Bedienperson oder durch Detektion einer kritischen Arbeitsweise des Feldhäckslers (1) erfolgt.

5. Feldhäcksler (1) nach Anspruch 1, **dadurch gekennzeichnet, dass** die Optimierung des Gesamtarbeitsprozesses zumindest folgende Schritte umfasst;
a) Analysieren der Arbeitsweise des Feldhäckslers (1) und Identifikation einer kritischen Arbeitsweise;
b) Abarbeiten zumindest eines in der Rechenvorrichtung (37) hinterlegten Regelwerkes zur Überwindung der kritischen Arbeitsweise, indem optimierte Betriebsparameter eines oder mehrerer Arbeitsorgane (30) unter Berücksichtigung von Wechselwirkungen zwischen den Arbeitsorganen (30) vorgeschlagen werden;
c) Visualisierung der Auswirkung von Wechselwirkungen;
d) selbsttätige oder von einer Bedienperson vorgenommene Einstellung der in Schritt b) generierten optimierten Betriebsparameter an einem oder mehreren Arbeitsorganen sowie Betreiben des Feldhäckslers (1) mit den optimierten Betriebsparametern; und
e) Beurteilung und Überprüfung der Arbeitsweise des Feldhäckslers (1) nach erfolgter Einstellung der optimierten Betriebsparameter an dem zumindest einen Arbeitsorgan (30).

6. Feldhäcksler (1) nach einem der vorangehenden Ansprüche, **dadurch gekennzeichnet, dass** das Fahrerassistenzsystem (25) mit zusätzlichen Assistenzsystemen vernetzbar ist, welche der Steuerung oder Regelung von Antriebsvorrichtung, Fahrwerk, Lenksystem; Überladesystem und/oder Spurführungssystem dienen.

7. Feldhäcksler (1) nach einem der vorangehenden Ansprüche, **dadurch gekennzeichnet, dass** als Arbeitsorgane (30) zumindest ein Vorsatzgerät (2), eine Einzugsvorrichtung (3), eine Häckselvorrichtung (6), eine Schleifvorrichtung, eine Nachbeschleunigungsvorrichtung (11) und eine Auswurfvorrichtung (13) vorgesehen sind.

8. Feldhäcksler (1) nach Anspruch 7, **dadurch gekennzeichnet, dass** als weitere Arbeitsorgane (30) eine Nachbearbeitungsvorrichtung (10) und/oder eine Siliermitteldosiervorrichtung (14) vorgesehen sind.

9. Feldhäcksler (1) nach einem der vorangehenden Ansprüche, **dadurch gekennzeichnet, dass** als Einstellautomaten (A₁, A₂, A₃, A₄, Aₙ) ein Vorsatzgeräteautomat und ein Einzugsautomat vorgesehen sind.

10. Feldhäcksler (1) nach Anspruch 9, **dadurch gekennzeichnet, dass** der Vorsatzgeräteautomat und der Einzugsautomat funktional in einem Zuführautomaten (36) zusammengeführt sind.

11. Feldhäcksler (1) nach einem der vorangehenden Ansprüche, **dadurch gekennzeichnet, dass** als Einstellautomat (A₁, A₂, A₃, A₄, Aₙ) ein Häckselautomat und/oder ein Schneidschärfeautomat vorgesehen sind.

12. Feldhäcksler (1) nach einem der vorangehenden Ansprüche, **dadurch gekennzeichnet, dass** als Einstellautomat (A₁, A₂, A₃, A₄, Aₙ) ein Nachbearbeitungsautomat und/oder ein Siliermittelautomat vorgesehen sind.

13. Feldhäcksler (1) nach einem der vorangehenden Ansprüche, **dadurch gekennzeichnet, dass** als Einstellautomat (A₁, A₂, A₃, A₄, Aₙ) ein Auswurfautomat und/oder ein Nebenaggregatoptimierungsautomat vorgesehen ist.

14. Feldhäcksler (1) nach einem der vorangehenden Ansprüche, **dadurch gekennzeichnet, dass** das Fahrerassistenzsystem (25) ein Dialogmodul (40) umfasst, welches einer dialoggeführten Bedienung des Fahrerassistenzsystems (25) durch eine Bedienperson dient.

15. Feldhäcksler (1) nach Anspruch 14, **dadurch gekennzeichnet, dass** die dialoggeführte Bedienung zwischen dem Fahrerassistenzsystem (25) und der Bedienperson natürlichsprachig erfolgt.

16. Feldhäcksler (1) nach einem der Ansprüche 14 oder 15, **dadurch gekennzeichnet, dass** ein Dialog zwischen dem Fahrerassistenzsystem (25) und dem der Bedienperson zumindest folgende Schritte umfasst:
a) Aktivierung des Dialogmoduls,
b) Editieren eines Einsatzzwecks,
c) Start eines Moduls "Optimierung", welches die Bedienperson zur Auswahl einer Strategie auffordert,
d) Aktivierung einer dialoggeführten Optimierung zumindest eines Betriebsparameters eines Arbeitsorgans (30) in Abhängigkeit von der ausgewählten Strategie unter Berücksichtigung einer Beeinflussung von arbeitsorganspezifischen Parametern anderer Arbeitsorgane (30) hierdurch.

17. Feldhäcksler (1) nach einem der vorangehenden Ansprüche, **dadurch gekennzeichnet, dass** das Fahrerassistenzsystem (25) mit einer mobilen Datenverarbeitungsvorrichtung (41) zur Durchführung einer bidirektionalen Kommunikation verbindbar ist, wobei die mobile Datenverarbeitungsvorrichtung (41) über eine grafische Benutzerschnittstelle verfügt und dazu eingerichtet ist, zumindest die Funktionen des Fahrerassistenzsystems (25) des Feldhäckslers (1) zu visualisieren und entfernt auszuführen.

18. Feldhäcksler (1) nach Anspruch 17, **dadurch gekennzeichnet, dass** der Feldhäcksler (1) eine Kommunikationseinheit (27) umfasst, welche mit zumindest einer ersten Schnittstelle ausgestattet ist, die mit einem Bussystem (24) des Feldhäckslers (1) verbindbar ist, und zumindest einer zweiten Schnittstelle zum Verarbeiten und Aufbereiten von Signalen des Bussystems (24) und zum Übermitteln an die mobile Datenverarbeitungsvorrichtung (41).

19. Feldhäcksler (1) nach Anspruch 17 oder 18, **dadurch gekennzeichnet, dass** die mobile Datenverarbeitungsvorrichtung (41) eine Speichereinheit aufweist, in welcher audiovisuelle Sequenzen abrufbar hinterlegbar sind.

20. Feldhäcksler (1) nach einem der Ansprüche 17 bis 19, **dadurch gekennzeichnet, dass** die mobile Datenverarbeitungsvorrichtung (41) unabhängig vom Betriebszustand des Feldhäckslers (1) betreibbar ist.

## Claims

1. A forage harvester (1) comprising
- a plurality of working units (30) for carrying out a harvested material processing process,
- a driver assistance system (25) which has a memory (38) for storing data and a computing device (37) for processing data stored in the memory as well as a graphical user interface (39),
- wherein the working unit (30) has at least one adjustable harvested material treatment means (31), at least one actuator system (32) for adjusting and/or actuating the at least one harvested material treatment means (31) as well as a control unit (33) for controlling the actuator system (32),
**characterized in that**
the respective working unit (30) is configured as an automated adjustment apparatus (A₁, A₂, A₃, A₄, Aₙ),
wherein the working unit (30) configured as an automated adjustment apparatus (A₁, A₂, A₃, A₄, Aₙ) comprises the at least one harvested material treatment means (31), the actuator system (32) as well as the control unit (33) in a manner such that control signals (33a) from the control unit (33) are communicated to the actuator system (32) by means of a data bus (24) and serve to adjust the at least one harvested material treatment means (31), wherein a sensor system (34) monitors the at least one harvested material treatment means (31) of the working unit (30) and optionally the actuator system (32),
the sensor data (34a) generated by the sensor system (34) are transferred to the control unit (33) by means of the bus system (24) for evaluation,
wherein the sensor data (34a) provided by the sensor system (34) as well as external information (35) form the input signals (I_{EN}) for the automated adjustment apparatus (A₁, A₂, A₃, A₄, Aₙ) and the automated adjustment apparatus (A₁, A₂, A₃, A₄, Aₙ) is configured to determine and specify the required adjustments of operational parameters of the working unit (30) continuously and autonomously,
wherein at least a portion of the working units (30) is associated with a respective sensor system (34) which is configured to detect signals for the determination of operational parameters as well as working unit-specific harvest processing parameters, wherein the driver assistance system (25) is configured to receive and evaluate the signals from the respective sensor system (34),
wherein the sensor systems (34) are configured to provide the signals acquired from the respective working unit (30) for the determination of the working unit-specific harvest processing parameters to the automated adjustment apparatus (A₁, A₂, A₃, A₄, Aₙ) corresponding thereto as input signals (I_{E1}, I_{E2}, I_{E3}, I_{E4}, I_{En}),
and wherein a plurality of the automated adjustment apparatuses (A₁, A₂, A₃, A₄, Aₙ) are integrated into the driver assistance system (25) which is at a higher level in the control hierarchy, wherein, by means of the driver assistance system (25), the mode of operation of each automated adjustment apparatus (A₁, A₂, A₃, A₄, Aₙ) can be optimized in its own right or as a function of at least one further automated adjustment apparatus (A₁, A₂, A₃, A₄, Aₙ),
and **in that** the driver assistance system (25) has sets of rules stored in the memory (38) or in a storage unit of the control units (33) which are associated with the respective automated adjustment apparatus (A₁, A₂, A₃, A₄, Aₙ), wherein the set of rules associated with the respective automated adjustment apparatus (A₁, A₂, A₃, A₄, Aₙ) carries out an optimization of the mode of operation of the respective working unit (30) independently of the mode of operation of the other working units (30),
and **in that** the driver assistance system (25) controls the automated adjustment apparatus (A₁, A₂, A₃, A₄, Aₙ) of the forage harvester (1) as a supervisor, so that an optimization of an overall working process of the forage harvester (1) occurs, and
**in that** the driver assistance system (25) which is at a higher level is configured to provide corresponding input signals (I_{E1}, I_{E2}, I_{E3}, I_{E4}, I_{En}) to each automated adjustment apparatus (A₁, A₂, A₃, A₄, ..., Aₙ) which are processed in accordance with the respective set of rules of the automated adjustment apparatus (A₁, A₂, A₃, A₄, *...,* Aₙ), wherein, in order to optimize the mode of operation of the respective automated adjustment apparatus (A₁, A₂, A₃, A₄, ..., Aₙ), an output signal (I_{A1}, I_{A2,} I_{A3}, I_{A4}, ..., I_{An}) is generated which serves to control the respective actuator system 32 of the working unit 30 controlled by the automated adjustment apparatus (A₁, A₂, A₃, A₄, ..., Aₙ), and
wherein the driver assistance system (25) is configured to provide the output signals (I_{A1}, I_{A2,} I_{A3}, I_{A4}, ..., I_{An}) from the respective automated adjustment apparatus (A₁, A₂, A₃, A₄, Aₙ) to the other automated adjustment apparatuses (A₁, A₂, A₃, A₄, Aₙ) as additional control input signals (S_{A1}, S_{A2}, S_{A3}, S_{A4}, S_{An}).

2. The forage harvester (1) according to claim 1, **characterized in that** in order to optimize the mode of operation of the individual working units (30), the driver assistance system (25) has selectable working unit-specific strategies which are stored in the memory (38).

3. The forage harvester (1) according to claim 2, **characterized in that** the selectable strategies are respectively orientated towards a target objective for the adjustment or for the optimization of at least one harvest processing parameter by specifying at least one operational parameter of at least one of the working units (30).

4. The forage harvester (1) according to one of the preceding claims, **characterized in that** an activation of the driver assistance system (25) is carried out by an operative or by detection of a critical mode of operation of the forage harvester (1).

5. The forage harvester (1) according to claim 1, **characterized in that** the optimization of the overall working process comprises at least the following steps:
a) analysis of the mode of operation of the forage harvester (1) and identification of a critical mode of operation;
b) execution of at least one set of rules stored in the computing device (37) in order to get through the critical mode of operation by proposing optimized operational parameters of one or more working units (30) which take interactions between the working units (30) into consideration;
c) visualization of the effect of interactions;
d) automatic adjustment, or adjustment by an operative, of the optimized operational parameters generated in step b) of one or more working units as well as operation of the forage harvester (1) with the optimized operational parameters; and
e) evaluation and review of the mode of operation of the forage harvester (1) after adjustment of the optimized operational parameters of the at least one working unit (30) has taken place.

6. The forage harvester (1) according to one of the preceding claims, **characterized in that** the driver assistance system (25) can be networked with additional assistance systems which serve to control or regulate the propulsion device, chassis, steering system; transfer system and/or track guidance system.

7. The forage harvester (1) according to one of the preceding claims, **characterized in that** at least a front attachment (2), a feeder device (3), a chopping device (6), a grinding device, a post-acceleration device (11) and a discharge device (13) are provided as the working units (30).

8. The forage harvester (1) according to claim 7, **characterized in that** a post-processing device (10) and/or a silage additive metering device (14) are provided as the working units (30).

9. The forage harvester (1) according to one of the preceding claims, **characterized in that** an automated front attachment apparatus and an automated feeder apparatus are provided as the automated adjustment apparatus (A₁, A₂, A₃, A₄, Aₙ).

10. The forage harvester (1) according to claim 9, **characterized in that** the automated front attachment apparatus and the automated feeder apparatus are brought together functionally in an automated infeed apparatus (36).

11. The forage harvester (1) according to one of the preceding claims, **characterized in that** an automated chopping apparatus and/or an automated cutter sharpening apparatus are provided as the automated adjustment apparatus (A₁, A₂, A₃, A₄, Aₙ).

12. The forage harvester (1) according to one of the preceding claims, **characterized in that** an automated post-processing apparatus and/or an automated silage additive apparatus are provided as the automated adjustment apparatus (A₁, A₂, A₃, A₄, Aₙ).

13. The forage harvester (1) according to one of the preceding claims, **characterized in that** an automated discharge apparatus and/or an automated auxiliary unit optimization apparatus is provided as the automated adjustment apparatus (A₁, A₂, A₃, A₄, Aₙ).

14. The forage harvester (1) according to one of the preceding claims, **characterized in that** the driver assistance system (25) comprises a dialogue module (40) which serves for dialogue-guided operation of the driver assistance system (25) by an operative.

15. The forage harvester (1) according to claim 14, **characterized in that** the dialogue-guided operation occurs between the driver assistance system (25) and the operative using natural speech.

16. The forage harvester (1) according to one of claims 14 or 15, **characterized in that** a dialogue between the driver assistance system (25) and the operative comprises at least the following steps:
a) activation of the dialogue module,
b) editing of an operational purpose,
c) starting an "optimization" module which prompts the operative to select a strategy,
d) activation of a dialogue-guided optimization of at least one operational parameter of a working unit (30) as a function of the selected strategy, thereby taking an influence of working unit-specific parameters of other working units (30) into consideration.

17. The forage harvester (1) according to one of the preceding claims, **characterized in that** the driver assistance system (25) can be connected to a mobile data processing device (41) for carrying out bidirectional communication, wherein the mobile data processing device (41) is provided with a graphical user interface and is therefore configured to visualize and remotely carry out at least the functions of the driver assistance system (25) of the forage harvester (1).

18. The forage harvester (1) according to claim 17, **characterized in that** the forage harvester (1) comprises a communications unit (27) which is equipped with at least one first interface which can be connected to a bus system (24) of the forage harvester (1), and at least one second interface for processing and generating signals from the bus system (24) and for communication to the mobile data processing device (41).

19. The forage harvester (1) according to claim 17 or claim 18, **characterized in that** the mobile data processing device (41) has a storage unit in which audio-visual sequences can be accessibly stored.

20. The forage harvester (1) according to one of claims 17 to 19, **characterized in that** the mobile data processing device (41) can be operated independently of the operational status of the forage harvester (1).

## Revendications

1. Ensileuse (1) incluant
- plusieurs organes de travail (30) pour exécuter un processus de traitement de produit récolté,
- un système d'assistance à la conduite (25) qui comporte une mémoire (38) pour l'enregistrement de données et un dispositif de calcul (37) pour le traitement de données enregistrées dans la mémoire, ainsi qu'une interface utilisateur graphique (39),
- les organes de travail (30) comportant au moins un moyen réglable de traitement de produit récolté (31), au moins un ensemble actionneur (32) pour régler et/ou actionner le au moins un moyen de traitement de produit récolté (31), ainsi qu'une unité de commande (33) pour agir sur l'ensemble actionneur (32),
**caractérisée en ce que**
l'organe de travail respectif (30) est conformé en automate de réglage (A₁, A₂, A₃, A₄, Aₙ), l'organe de travail (30) conformé en automate de réglage (A₁, A₂, A₃, A₄, Aₙ) incluant le au moins un moyen de traitement de produit récolté (31), l'ensemble actionneur (32) ainsi que l'unité de commande (33), de façon que des signaux de commande (33a) soient transmis par l'unité de commande (33) à l'ensemble actionneur (32) au moyen d'un bus de données (24), lesquels servent au réglage du au moins un moyen de traitement de produit récolté (31), un système de capteur (34) surveillant le au moins un moyen de traitement de produit récolté (31) de l'organe de travail (30) et le cas échéant l'ensemble actionneur (32), les données de capteur (34a) générées par le système de capteur (34) sont transmises au moyen du système de bus (24) à l'unité de commande (33) pour analyse,
les données de capteur (34a) fournies par le système de capteur (34) ainsi que des informations externes (35) formant les signaux d'entrée (I_{EN}) de l'automate de réglage (A₁, A₂, A₃, A₄, Aₙ),
et l'automate de réglage (A₁, A₂, A₃, A₄, Aₙ) est agencé pour déterminer et prescrire les réglages nécessaires de paramètres d'exploitation de l'organe de travail (30) de manière autonome continue,
un système de capteur (34) étant associé respectivement à au moins une partie des organes de travail (30), lequel est agencé pour la détection de signaux afin de déterminer des paramètres d'exploitation ainsi que des paramètres de processus de récolte spécifiques aux organes de travail,
le système d'assistance à la conduite (25) étant agencé pour recevoir et analyser les signaux du système de capteur (34) respectif,
les systèmes de capteur (34) étant agencés pour fournir les signaux pour la détermination des paramètres de processus de récolte spécifiques à l'organe de travail, reçus de l'organe de travail (30) respectif, en tant que signaux d'entrée (I_{E1}, I_{E2}, I_{E3}, I_{E4}, I_{En}) aux automates de réglage (A₁, A₂, A₃, A₄, Aₙ) correspondants,
et une pluralité d'automates de réglage (A₁, A₂, A₃, A₄, Aₙ) étant intégrée dans le système d'assistance à la conduite (25) de niveau supérieur dans la hiérarchie de commande, le système d'assistance à la conduite (25) permettant d'optimiser le mode de travail de chaque automate de réglage (A₁, A₂, A₃, A₄, Aₙ) en soi ou en fonction d'au moins un autre automate de réglage (A₁, A₂, A₃, A₄, Aₙ), et **en ce que** le système d'assistance à la conduite (25) présente des bases de règles enregistrées dans la mémoire (38) ou dans une unité de mémoire des unités de commande (33), lesquelles sont associées aux automates de réglage (A₁, A₂, A₃, A₄, Aₙ) respectifs, la base de règles associée à l'automate de réglage (A₁, A₂, A₃, A₄, Aₙ) respectif provoquant une optimisation du mode de travail de l'organe de travail (30) respectif, indépendamment du mode de travail des autres organes de travail (30), et **en ce que** le système d'assistance à la conduite (25) agit sur les automates de réglage (A₁, A₂, A₃, A₄, Aₙ) de l'ensileuse (1) en tant que superviseur, de façon à instaurer une optimisation d'un processus de travail global de l'ensileuse (1), et **en ce que** le système d'assistance à la conduite (25) de niveau supérieur est agencé pour fournir à chaque automate de réglage (A₁, A₂, A₃, A₄, ..., Aₙ) des signaux d'entrée (I_{E1}, I_{E2}, I_{E3}, I_{E4}, ..., I_{En}) correspondants qui sont traités conformément à la base de règles respective des automates de réglage (A₁, A₂, A₃, A₄, ..., Aₙ), sachant que pour l'optimisation du mode de travail de l'automate de réglage (A₁, A₂, A₃, A₄, ..., Aₙ) respectif, un signal de sortie (I_{A1}, I_{A2,} I_{A3}, I_{A4}, ..., I_{An}) est généré, lequel sert à l'activation de l'ensemble actionneur 32 respectif de l'organe de travail 30 activé par l'automate de réglage (A₁, A₂, A₃, A₄, ..., Aₙ), et le système d'assistance à la conduite (25) étant agencé pour fournir les signaux de sortie (I_{A1}, I_{A2,} I_{A3}, I_{A4}, ..., I_{An}) de l'automate de réglage (A₁, A₂, A₃, A₄, Aₙ) respectif en tant que signaux d'entrée de commande (S_{A1}, S_{A2}, S_{A3}, S_{A4}, S_{An}) supplémentaires aux autres automates de réglage (A₁, A₂, A₃, A₄, Aₙ).

2. Ensileuse (1) selon la revendication 1, **caractérisée en ce que** le système d'assistance à la conduite (25) comporte, pour l'optimisation du mode de travail des différents organes de travail (30), des stratégies enregistrées dans la mémoire (38), sélectionnables, spécifiques aux organes de travail.

3. Ensileuse (1) selon la revendication 2, **caractérisée en ce que** les stratégies sélectionnables sont dirigées respectivement vers un objectif de réglage ou d'optimisation d'au moins un paramètre de processus de récolte par l'intermédiaire d'une prescription d'au moins un paramètre d'exploitation d'au moins d'un des organes de travail (30).

4. Ensileuse (1) selon une des revendications précédentes, **caractérisée en ce qu'**une activation du système d'assistance à la conduite (25) s'effectue par l'intermédiaire d'un opérateur ou par la détection d'un mode de travail critique de l'ensileuse (1).

5. Ensileuse (1) selon la revendication 1, **caractérisée en ce que** l'optimisation du processus de travail global inclut au moins les étapes suivantes :
a) analyse du mode de travail de l'ensileuse (1) et identification d'un mode de travail critique ;
b) exécution d'au moins une base de règles enregistrée dans le dispositif de calcul (37) pour surmonter le mode de travail critique, par le fait que des paramètres d'exploitation optimisés d'un ou plusieurs organes de travail (30) sont proposés en tenant compte d'interactions entre les organes de travail (30) ;
c) visualisation de l'effet des interactions ;
d) réglage automatique ou effectué par un opérateur des paramètres d'exploitation optimisés générés à l'étape b), sur un ou plusieurs organes de travail, ainsi que fonctionnement de l'ensileuse (1) avec les paramètres d'exploitation optimisés ; et
e) évaluation et contrôle du mode de travail de l'ensileuse (1) à l'issue de l'instauration des paramètres d'exploitation optimisés sur l'organe de travail (30), au nombre d'au moins un.

6. Ensileuse (1) selon une des revendications précédentes, **caractérisée en ce que** le système d'assistance à la conduite (25) peut être mis en réseau avec des systèmes d'assistance supplémentaires qui servent à la commande ou à la régulation du dispositif d'entraînement, du train de roulement, du système de direction, du système de déchargement et/ou du système de suivi de traces.

7. Ensileuse (1) selon une des revendications précédentes, **caractérisée en ce que** comme organes de travail (30) sont prévus au moins un outil frontal (2), un dispositif d'amenée (3), un dispositif de hachage (6), un dispositif d'affûtage, un dispositif de distribution-accélération (11) et un dispositif d'éjection (13).

8. Ensileuse (1) selon la revendication 7, **caractérisée en ce que** comme autres organes de travail (30) sont prévus un dispositif de post-traitement (10) et/ou un dispositif de dosage d'additif d'ensilage (14).

9. Ensileuse (1) selon une des revendications précédentes, **caractérisée en ce que** comme automates de réglage (A₁, A₂, A₃, A₄, Aₙ) sont prévus un automate d'outil frontal et un automate d'amenée.

10. Ensileuse (1) selon la revendication 9, **caractérisée en ce que** l'automate d'outil frontal et l'automate d'amenée sont réunis fonctionnellement en un automate d'alimentation (36).

11. Ensileuse (1) selon une des revendications précédentes, **caractérisée en ce que** comme automate de réglage (A₁, A₂, A₃, A₄, Aₙ) sont prévus un automate de hachage et/ou un automate d'affûtage de couteaux.

12. Ensileuse (1) selon une des revendications précédentes, **caractérisée en ce que** comme automate de réglage (A₁, A₂, A₃, A₄, Aₙ) sont prévus un automate de post-traitement et/ou un automate d'additif d'ensilage.

13. Ensileuse (1) selon une des revendications précédentes, **caractérisée en ce que** comme automate de réglage (A₁, A₂, A₃, A₄, Aₙ) est prévu un automate d'éjection et/ou un automate auxiliaire d'optimisation d'organe.

14. Ensileuse (1) selon une des revendications précédentes, **caractérisée en ce que** le système d'assistance à la conduite (25) inclut un module de dialogue (40) qui sert à une utilisation sous assistance conversationnelle du système d'assistance à la conduite (25) par un opérateur.

15. Ensileuse (1) selon la revendication 14, **caractérisée en ce que** l'utilisation sous assistance conversationnelle s'effectue en langage naturel entre le système d'assistance à la conduite (25) et l'opérateur.

16. Ensileuse (1) selon une des revendications 14 ou 15, **caractérisée en ce qu'**un dialogue entre le système d'assistance à la conduite (25) et l'opérateur inclut au moins les étapes suivantes :
a) activation du module de dialogue,
b) choix d'un type d'application,
c) lancement d'un module « optimisation » qui invite l'opérateur à sélectionner une stratégie,
d) activation d'une optimisation sous assistance conversationnelle d'au moins un paramètre d'exploitation d'un organe de travail (30) en fonction de la stratégie sélectionnée en tenant compte d'une influence sur des paramètres spécifiques à l'organe de travail d'autres organes de travail (30).

17. Ensileuse (1) selon une des revendications précédentes, **caractérisée en ce que** le système d'assistance à la conduite (25) peut être relié à un dispositif mobile de traitement de données (41) pour réaliser une communication bidirectionnelle, le dispositif mobile de traitement de données (41) disposant d'une interface utilisateur graphique et étant agencé pour visualiser et exécuter à distance au moins les fonctions du système d'assistance à la conduite (25) de l'ensileuse (1).

18. Ensileuse (1) selon la revendication 17, **caractérisée en ce que** l'ensileuse (1) inclut une unité de communication (27), laquelle est équipée d'au moins une première interface, qui peut être reliée à un système de bus (24) de l'ensileuse (1), et d'au moins une deuxième interface pour traiter et mettre en forme des signaux du système de bus (24) et pour les transmettre au dispositif mobile de traitement de données (41).

19. Ensileuse (1) selon la revendication 17 ou 18, **caractérisée en ce que** le dispositif mobile de traitement de données (41) comporte une unité de mémoire dans laquelle des séquences audiovisuelles sont enregistrables de manière consultable.

20. Ensileuse (1) selon une des revendications 17 à 19, **caractérisée en ce que** le dispositif mobile de traitement de données (41) est utilisable indépendamment de l'état de fonctionnement de l'ensileuse (1).
